# EUROPEAN PATENT SPECIFICATION

(11) **EP 3 297 400 B1**
(45) Date of publication and mention of the grant of the patent: **03.07.2019**
(21) Application number: 16792380.4
(22) Date of filing: 12.05.2016
(51) Int. Cl.: H05B 6/12, H05B 6/06

(54) **INDUCTION HEATING COOKING UTENSIL**
KOCHUTENSIL MIT INDUKTIONSERHITZUNG
USTENSILE DE CUISINE À CHAUFFAGE PAR INDUCTION

(30) Priority: 14.05.2015 JP 2015098670
(43) Date of publication of application: 21.03.2018
(73) Proprietor: Panasonic Intellectual Property Management Co., Ltd., Osaka-shi, Osaka 540-6207 (JP)
(72) Inventor: OGATA, Taizou, Osaka-shi, Osaka 540-6207 (JP); TERAMOTO, Takahiro, Osaka-shi, Osaka 540-6207 (JP); ASANO, Masato, Osaka-shi, Osaka 540-6207 (JP); KINOSHITA, Masashi, Osaka-shi, Osaka 540-6207 (JP)
(74) Representative: SSM Sandmair
(86) International application number: PCT/JP2016/002323
(87) International publication number: WO 2016/181653

(56) References cited:
- EP-A1- 2 252 130
- EP-A1- 2 688 366
- EP-A1- 2 846 607
- WO-A1-2011/114603
- WO-A1-2013/042288
- WO-A1-2014/064941
- JP-A- 2011 009 079
- JP-B2- 5 369 155

## Description

### TECHNICAL FIELD

The present invention relates to an induction heating cooker which heats an object to be heated such as a metal-made cooking pan placed on a top plate.

### BACKGROUND ART

In an induction heating cooker used in general, one or a plurality of heating coils are disposed just below a top plate for one heating port. The induction heating cooker is configured to heat a metal-made cooking pan or the like which is an object to be heated placed in the top plate by induction heating using the heating coil or the heating coils.

Patent Literature 1 proposes an induction heating cooker having a multi coil structure where a plurality of heating coils are disposed just below a top plate, and one object to be heated is heated by the plurality of heating coils. Patent Literature 1 also proposes a display means for displaying a position where the object to be heated detected by a load detecting means is placed.

Patent Literature 2 proposes an induction heating cooker which includes, in addition to a multi coil structure, an operating part which stores a heating coil pattern formed of a plurality of heating coils and performs a display corresponding to heating coil pattern information, in which the operating part can perform an operation of selecting the heating coil to which electricity is supplied.

Patent Literature 3 proposes a heating cooker which includes: a heating area provided with a plurality of heating coils; a light emitting control part provided with individual light emitting parts which correspond to the heating coils; and a load detecting means for detecting whether or not an object to be heated is placed above the respective heating coils. The heating cooker described in Patent Literature 3 is configured to turn on the light emitting parts which correspond to the heating coils heating cooperatively and to display the heating coils heating also on the operating part at the same time.

Patent Literature 4 discloses an induction heating cooker including a top plate adapted to have an object placed thereon, plural heating coils provided below a lower surface of the top plate, an inverter for supplying high-frequency power to the heating coils, a data memory, and a controller controlling the inverter. The data memory stores first and second heating coil patterns. Each of the first and second heating coil patterns defines one or more heatable regions and one or more non-heatable regions. The controller selects a heating coil pattern from the first and second coil patterns. The controller controls the inverter such that high-frequency power can be supplied to one or more first heating coils out of the plural heating coils located in the one or more heatable regions of the selected heating coil pattern. The controller controls the inverter such that high-frequency power cannot be supplied to one or more second heating coils of the plural heating coils located in the one or more non-heatable regions of the selected heating coil pattern. This induction heating cooker can adjust at least one of the location, size, and the number of the heatable regions for induction-heating objects in response to at least one of the location, size, and the number of objects to be heated.

However, the above-mentioned conventional heating cookers have the following drawback. That is, although a user can perform intended cooking when an object to be heated (load) is correctly placed on the designated heating area, the object to be heated (load) is partially heated when the object to be heated (load) protrudes from the designated heating area and hence, a failure in cooking such as heating spots or scorching of a cooked object occurs.

### Citation List

### Patent Literature

PTL 1: Unexamined Japanese Patent Publication No. 2008-293871
PTL 2: Unexamined Japanese Patent Publication No. 2011-060476
PTL 3: WO/2011/114603
PTL 4: EP 2 252 130 A1

### SUMMARY OF THE INVENTION

The present invention has been made in view of the above-mentioned drawbacks, and it is an object of the present invention to provide an induction heating cooker which can prevent a failure in cooking such as heating spots or scorching of a cooked object which occurs when an object to be heated (load) such as a pan is placed on an erroneous position.

To be more specific, an induction heating cooker according to one example of an exemplary embodiment of the present invention is an induction heating cooker which includes a heating area where a plurality of heating coils are displaced below a top plate. The induction heating cooker includes: a load detecting part which detects a state where an object to be heated (load) is placed just above the plurality of heating coils disposed in the heating area which a user designates; and an operating part which designates the heating area. The operating part includes a coil display part which corresponds to the plurality of heating coils disposed in the heating area. The induction heating cooker according to one example of the exemplary embodiment of the present invention notifies a user of information relating to the heating coil where the load detecting part detects that the object to be heated (load) is placed just above the heating coil and the heating coil where the load detecting part detects that the object to be heated (load) is not placed just above the heating coil by changing a display content of the coil display part.

With such configuration, the occurrence of heating spots can be prevented and hence, a failure in cooking such as scorching of a cooked object can be prevented.

To be more specific, an induction heating cooker according to one example of the exemplary embodiment of the present invention includes: a body; a top plate on which an object to be heated is placed; a plurality of heating coilsprovidedbelow the top plate and configured to heat the object to be heated; and a plurality of heating areas formed on the top plate and configured to indicate a position where the object to be heated is placed. The induction heating cooker according to one example of the exemplary embodiment of the present invention further includes: a load detecting part which detects that the object to be heated is placed above the plurality of respective heating coils; a non-load notifying part which notifies that the heating coil is in a non-load state based on a detection result of the load detecting part; and an operating part which selects a heating area to be heated from the plurality of heating areas.

The induction heating cooker according to one example of the exemplary embodiment of the present invention further includes a coil display part which displays operation states of the plurality of heating coils and a control part which controls operations of the load detecting part and the coil display part. In the induction heating cooker according to one example of the exemplary embodiment of the present invention, among the plurality of heating coils, two or more heating coils are provided below the plurality of respective heating areas. The coil display part has display parts each of which corresponds to each of the plurality of heating coils. The coil display part, when the heating area to be heated is selected by the operating part from the plurality of heating areas, indicates, by the display parts which correspond to two or more heating coils provided within the selected heating area, that the selected heating area is selected as the heating area to be heated. The load detecting part detects whether or not an object to be heated exists above two or more respective heating coils within the selected heating area. When the load detecting part detects that an object to be heated exists above at least one of two or more respective heating coils within the selected heating area, the control part outputs an instruction signal which makes the display part to continue the display where, among two or more heating coils, the heating coil above which an object to be heated is placed is selected as the heating coil to be heated on the display part which corresponds to the heating coil above which the object to be heated is placed to the coil display part. Further, when the load detecting part detects that an object to be heated does not exist above either one of two or more heating coils within the selected heating area, the control part changes a display which indicates that heating is selected on the display part which corresponds to the heating coil above which the object to be heated does not exist and, at the same time, notifies that the heating coil is in a non-load state by a non-load notifying part. The control part further outputs an instruction signal which changes the display mode to a display indicating that the heating coil above which the object to be heated does not exist is not selected as the heating coil to be heated to the coil display part.

With such configuration, a user can preliminarily select the heating coils to be used from the plurality of heating coils. When an object to be heated (load) such as a pan is not placed just above some heating coils among the selected heating coils, the display is changed from a display of selected heating coils to a display of actually heated heating coils after notifying that the heating coil is partially in a non-load state. Accordingly, even when an object to be heated is placed in a protruding manner from the heating area, a user can recognize the existence of the heating coils which are not heated within the set heating area and can accurately rearrange the position of the object to be heated. Further, it is possible to prevent a failure in cooking such as heating spots or scorching of a cooked object which occurs when an object to be heated (load) such as a pan is placed in an erroneous position.

Further, with such configuration, in the case where one object to be heated is heated by the plurality of preliminarily designated heating coils, when a display state is changed from a state where some of the designated heating coils are displayed as the heating coils to be heated to a state where some of the designated heating coils are displayed as the heating coils to be heated actually (that is, heating coils above which the object to be heated is placed), it is possible to notify a user that some of the designated heating coils are in a non-load state by the non-load notifying part which notifies of the existence of the non-load state where the object to be heated is not placed above the heating coil. Accordingly, a user can correct the position of the object to be heated and hence, it is possible to prevent the occurrence of heating spots and a failure in cooking such as scorching of a cooked object.

With such configuration, load detection is performed such that a selected state is displayed with respect to the heating coils in the heating area selected by the user. Based on the load detection, a selection state is released with respect to some heating coils just above which an object to be heated (load) such as a pan does not exist so that it is possible to notify the user that the object to be heated (load) does not exist above these heating coils before performing heating.

With such configuration, the coil display part can perform a display in the vicinity of the operating part corresponding to the respective heating coils. Accordingly, it becomes easy for a user to make his image of a range of heating coils to be actually heated and his image of an operating range on the operating part agree with each other. The user can intuitively understand a position to be selected for heating the heating coils so that the user can select the heating coil to be heated with a simple operation.

Further, with such configuration, a load can be detected only with respect to the heating coils in the designated heating area and the heating coils disposed around the heating area and hence, it is unnecessary to perform a load detection with respect to the heating coils which are not expected to be heated. Accordingly, the power consumption, the heat generation in inverters and heating coils and undesired heat radiation can be suppressed and, at the same time, a time required for performing load detection can be shortened.

### BRIEF DESCRIPTION OF DRAWINGS

FIG. 1 is a view showing a configuration of an induction heating cooker according to a first exemplary embodiment of the present invention.
FIG. 2 is a schematic view showing a display of an operating part of the induction heating cooker according to the first exemplary embodiment of the present invention.
FIG. 3A is a schematic view showing an arrangement example of heating coils of the induction heating cooker and an object to be heated according to the first exemplary embodiment of the present invention.
FIG. 3B is a schematic view showing another arrangement example of heating coils of the induction heating cooker and an object to be heated according to the first exemplary embodiment of the present invention.
FIG. 3C is a schematic view showing still another arrangement example of heating coils of the induction heating cooker and an object to be heated according to the first exemplary embodiment of the present invention.
FIG. 3D is a schematic view showing still another arrangement example of heating coils of the induction heating cooker and an object to be heated according to the first exemplary embodiment of the present invention.
FIG. 4 is a schematic view showing the configuration of an induction heating cooker according to a second exemplary embodiment of the present invention.
FIG. 5 is a schematic view showing a display and a configuration of an operating part of the induction heating cooker according to the second exemplary embodiment of the present invention.
FIG. 6A is a schematic view showing an arrangement example of heating coils of the induction heating cooker, a temperature detecting element and an object to be heated according to the second exemplary embodiment of the present invention.
FIG. 6B is a schematic view showing another arrangement example of heating coils of the induction heating cooker, a temperature detecting element and an object to be heated according to the second exemplary embodiment of the present invention.
FIG. 6C is a schematic view showing still another arrangement example of heating coils of the induction heating cooker, a temperature detecting element and an object to be heated according to the second exemplary embodiment of the present invention.

### DESCRIPTION OF EMBODIMENTS

Hereinafter, exemplary embodiments of the present invention will be described in detail with reference to the drawings. In the respective drawings, constitutional elements (blocks) which are identical to each other or constitutional elements (blocks) which correspond to each other are given same symbols. It is noted that descriptions in more detail than necessary may be omitted in the description made hereinafter. For example, the detailed description of already well-known matters and the repeated description of substantially the same configuration may be omitted. This omission is made so as to avoid the description made hereinafter from becoming unnecessarily redundant and to facilitate the understanding of the present invention by those who are skilled in the art.

Further, the inventors of the present invention provide the accompanying drawings and the following description so that a person skilled in the art can fully understand the present disclosure, and the accompanying drawings and the following description do not intend to limit the subject matter defined by the claims.

### (First exemplary embodiment)

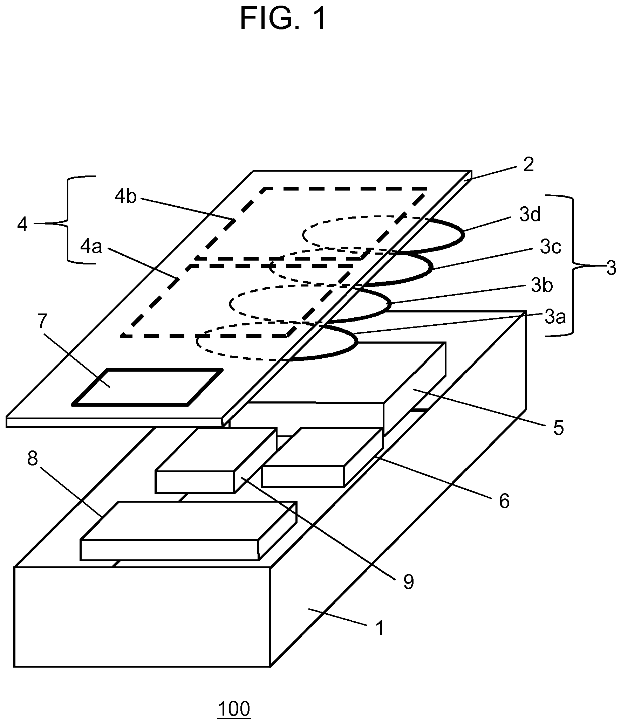

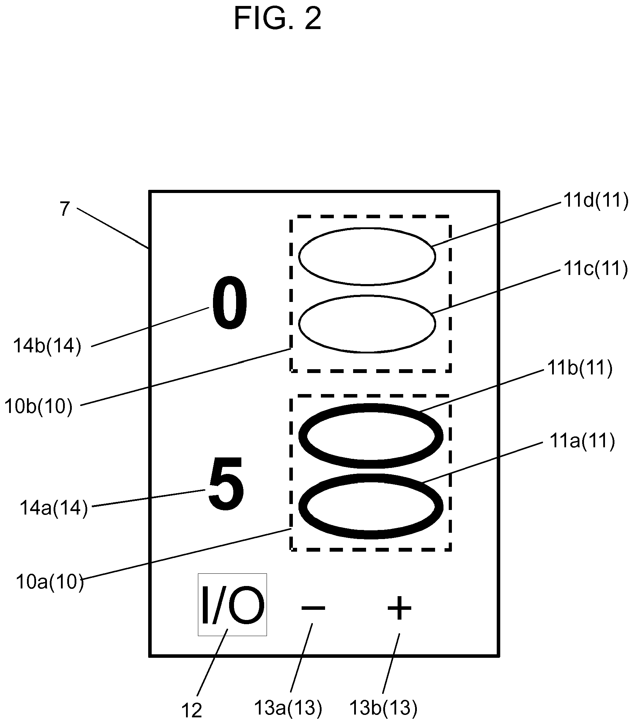

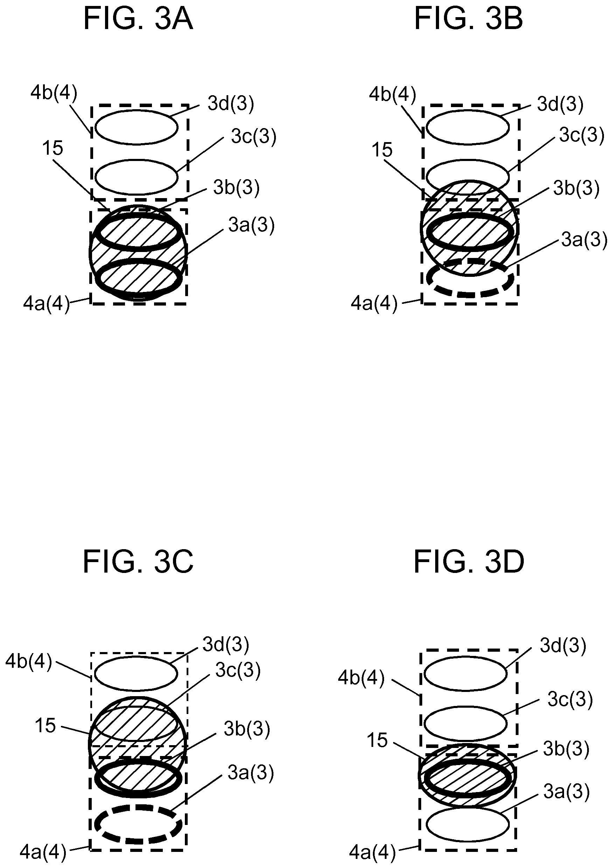

FIG. 1 is a view showing a configuration of an induction heating cooker according to a first exemplary embodiment of the present invention. FIG. 2 is a schematic view showing a display of an operating part of the induction heating cooker according to the first exemplary embodiment of the present invention. FIG. 3A to FIG. 3D are schematic views showing arrangement examples of heating coils of the induction heating cooker and an object to be heated according to the first exemplary embodiment of the present invention.

First, the configuration of induction heating cooker 100 according to the first exemplary embodiment of the present invention will be described. In induction heating cooker 100 shown in FIG. 1, top plate 2 on which an object to be heated is placed is mounted on an upper surface of body 1 which forms an outer profile. Although it is often the case where top plate 2 is made of crystalized glass, top plate 2 may be formed using other materials.

Below top plate 2, a plurality of heating coils 3 are arranged in a juxtaposed manner in a longitudinal direction (in a fore-and-aft direction in FIG. 1). In induction heating cooker 100 shown in FIG. 1, the plurality of heating coils 3 are formed of four heating coils, that is, first heating coil 3a, second heating coil 3b, third heating coil 3c and fourth heating coil 3d (hereinafter, these heating coils being also simply referred to as heating coils 3). The plurality of heating coil 3 (four heating coils 3a, 3b, 3c, 3d in this exemplary embodiment) disposed below top plate 2 are grouped into two heating areas depicted on top plate 2, that is, first heating area 4a and second heating area 4b. First heating coil 3a and second heating coil 3b are disposed in first heating area 4a, and third heating coil 3c and fourth heating coil 3d are disposed in second heating area 4b.

Since first heating area 4a and second heating area 4b are disposed adjacently to each other, even when one object to be heated is placed on the plurality of heating areas 4 in a straddling manner, it is possible to heat an object to be heated. The plurality of heating coils 3 (that is, first heating coil 3a, second heating coil 3b, third heating coil 3c and fourth heating coil 3d) respectively generate, in accordance with an instruction from control part 8, a magnetic flux due to a high frequency current supplied from inverter circuit 5, and the magnetic flux heats an object to be heated placed on top plate 2 by induction heating.

In this exemplary embodiment, the plurality of heating coils 3 are arranged in four rows in the longitudinal direction and in one row in the lateral direction. However, provided that two or more heating coils are arranged juxtaposedly, the arrangement of the plurality of heating coils 3 is not limited to such an arrangement.

Although electric input and output signals are transmitted to and received from each other between heating coil 3, inverter circuit 5, load detecting part 6, operating part 7, control part 8 and non-load notifying part 9, when wiring between these constitutional elements is drawn, the drawing becomes complicated. Accordingly, the wiring is omitted intentionally and the connection between these constitutional elements will be described in writing.

Inverter circuit 5 supplies an electric current of high frequency (approximately 20 kHz to 100 kHz) to heating coils 3 so as to heat a metal-made object to be heated such as a pan disposed just above heating coils 3. Inverter circuit 5 outputs information such as an electric current which flows through the coil and voltages at both ends of the coil when heating is performed to load detecting part 6, and receives, as an input, information on heating coil 3 just above which an object to be heated (load) which can be heated exists from load detecting part 6. Inverter circuit 5 continuously supplies an electric current of high frequency to heating coil 3 just above which an object to be heated (load) exists. Further, inverter circuit 5 outputs to control part 8 information on whether or not an electric current of high frequency can be normally supplied or a kind of abnormality when an abnormality occurs so that an electric current cannot be supplied.

Load detecting part 6 is connected to heating coils 3, inverter circuit 5, operating part 7 and control part 8. Load detecting part 6 detects whether or not an object to be heated (load) which can be heated exists just above heating coils 3 based on a coil current, an inter-coil voltage, input power to inverter circuit 5 or the like when an electric current is supplied to heating coils 3 from inverter circuit 5. Load detecting part 6 outputs information on detection of a load in heating coils 3 to inverter circuit 5, operating part 7 and control part 8.

Load detecting part 6 may be an electrostatic capacitance type detecting part where the presence or non-presence of an object to be heated is detected by detecting capacitive coupling between the object to be heated and heating coil based on electrostatic capacitance or may be a detector which detects the presence or non-presence of a load (object to be heated) by detecting a change in inductance of a coil for detection which is additionally provided. Both detectors can acquire substantially the same advantageous effect.

Operating part 7 includes: an input part which a user of induction heating cooker 100 can operate; and a display part (to be described later in detail with reference to FIG. 2) which displays information selected or set by the input part (to be described later in detail with reference to FIG. 2). Operating part 7 is connected to control part 8 and non-load notifying part 9. Operating part 7 outputs positional information of heating area 4 which a user of induction heating cooker 100 selects to load detecting part 6, and outputs set information such as the position of heating area 4 which the user selects and an electric power amount (heating power) for heating and the like to control part 8. Operating part 7 receives, as an input, information such as whether or not inverter circuit 5 is supplying a set electric power amount (heating power) in normally selected heating area 4 or a kind of abnormality when abnormality occurs from control part 8, and displays the information. When information on heating coil 3 just above which an object to be heated does not exist within set heating area 4 is inputted to operating part 7 from non-load notifying part 9, operating part 7 visually notifies a user that heating coil 3 is in a non-load state by blinking heating coil display part 11 to be described later or the like.

Operating part 7 also changes a display on coil display part 11 to be described later based on load information relating to heating coil 3 which is outputted from load detecting part 6.

Control part 8 is connected to inverter circuit 5, load detecting part 6, operating part 7 and non-load notifying part 9. Information outputted from operating part 7 such as heating area 4 of induction heating cooker 100 which a user selects, an amount of electric power (heating power) set in the heating area and the like are inputted to control part 8, and inputted information are outputted to inverter circuit 5. Information such as whether or not an amount of electric power (heating power) set in the normally selected heating area 4 without abnormality is supplied and a kind of abnormality when the abnormality occurs is inputted to control part 8 from inverter circuit 5. Further, information such as heating coil 3 just above which an object to be heated (load) such as a pan exists is inputted to control part 8 from load detecting part 6, and inputted information is outputted to operating part 7 and non-load notifying part 9.

Non-load notifying part 9 is connected to operating part 7 and control part 8. Non-load notifying part 9 may include a sound generating part. In this exemplary embodiment, non-load notifying part 9 includes the sound generating part. Non-load notifying part 9 outputs information to operating part 7 that an object to be heated (load) does not exist above at least one of selected heating coils 3 based on information (signal) inputted from control part 8. When non-load notifying part 9 includes the sound generating part, non-load notifying part 9 performs notification using a buzzer sound and a voice when necessary through the sound generating part.

This exemplary embodiment exemplifies the case where inverter circuit 5, load detecting part 6, operating part 7, control part 8 and non-load notifying part 9 are provided as separate circuit blocks, and these constitutional elements are connected to each other by wiring. However, the present invention is not limited to such a case. All circuit blocks (inverter circuit 5, load detecting part 6, operating part 7, control part 8 and non-load notifying part 9) may exist in combination on the same substrate or may be introduced in combination in the inside of a microcomputer as a program. It is needless to say that these configurations also can acquire substantially the same advantageous effects and can perform display and notification.

In this exemplary embodiment, non-load notifying part 9 includes the sound generating part. However, the present invention is not limited to such a case, and non-load notifying part 9 may include other notification functions. It is needless to say that the advantageous effects of the present invention can be acquired by merely outputting information which displays a state where an object to be heated (load) does not exist above the selected heating coils 3 to operating part 7.

FIG. 2 is a view of operating part 7 as viewed from above. FIG. 2 shows a display example on operating part 7 when heating area 4a shown in FIG. 1 is selected by a user, level of heating power is set to level 5, and an object to be heated (load) is placed just above first heating coil 3a and heating coil 3b (arrangement shown in FIG. 3A to be described later).

Operating part 7 is formed of inputting parts such as heating area selecting part 10, power source switching part 12 and heating power adjusting part 13, heating coil display part 11 and setting display part 14. The respective inputting parts include an electrode on a lower surface of top plate 2. Each inputting part detects that the inputting part is operated by making use of a change in electrostatic capacitance which changes when a person touches the inputting part from above top plate 2.

Each display part is configured to allow a user to visually recognize a change in a light emission state in a see-through manner through top plate 2 by turning on, turning off or flickering a light emitting diode (LED) disposed on a lower surface of top plate 2, by changing brightness, or by changing light emitting color.

In this exemplary embodiment, the respective inputting parts are preliminarily printed on top plate 2. However, the present invention is not limited to such a configuration. Even when the inputting part provided with the display part having a function of displaying only the inputting part which can be operated and not displaying the inputting part which cannot be operated is used, such a configuration can acquire substantially the same advantageous effects of the present invention.

The respective inputting parts detect the content of an operation by an electrostatic capacitance method where an operation of the inputting part is detected based on a change in electrostatic capacitance. Operating part 7 may be formed by boring top plate 2 and a bored portion may be formed of a material different from a material for forming top plate 2. Such a configuration can also acquire substantially the same advantageous effect. For example, it is possible to provide the detection configuration which is more inexpensive than the configuration which adopts an electrostatic capacitance method where the content of an operation is detected by a contact method which uses a switch provided with contacts.

In this exemplary embodiment, each display part displays a change in a light emitting state using a light emitting element (LED). However, a shape of a portion which emits light may be changed using liquid crystal. That is, a light emitting state can be expressed in versatile variations.

Heating area selecting part 10 is formed of: heating area selecting part 10a for selecting heating area 4a; and heating area selecting part 10b for selecting heating area 4b. Further, the configuration is adopted where when each one of heating area selecting parts 10a, 10b is pushed twice, a user can select both heating area 4a and heating area 4b.

Heating coil display part 11 is formed of: first heating coil display part 11a which displays a state of first heating coil 3a; second heating coil display part 11b which displays a state of second heating coil 3b; third heating coil display part 11c which displays a state of third heating coil 3c; and fourth heating coil display part 11d which displays a state of fourth heating coil 3d. When a user selects heating area selecting part 10a, first heating coil display part 11a and second heating coil display part 11b disposed in heating area selecting part 10a brightly shine by changing brightness thereof (this state being indicated by a bold line in FIG. 2 and other coil display parts which do not shine brightly being indicated by a fine line).

In this exemplary embodiment, the configuration is exemplified where elliptical heating coil display part 11 is displayed inside heating area selecting part 10 having a quadrangular shape. However, heating area selecting part 10 may adopt other display methods. For example, heating area selecting part 10 may adopt the method where a simple dot display is disposed at the center position of each heating area selecting part 10. It is sufficient that heating area selecting part 10 be configured such that the plurality of heating coils 3 are selected by operating heating area selecting part 10.

It is not always necessary to form heating coil display part 11 into an elliptical shape. Even when heating coil display part 11 is formed into an arbitrary shape such as a quadrangular shape, a round shape or a shape formed of a plurality of lines, provided that heating coil display part 11 has a shape and a color by which it is possible to distinguish the correspondence between heating coils 3 and respective heating coil display parts 11, such heating coil display part 11 can acquire substantially the same advantageous effects.

Heating coil display part 11 is disposed in operating part 7. However, the present invention is not particularly limited to the configuration where heating coil display part 11 is disposed in operating part 7, and it is sufficient that heating coil display part 11 be disposed at a place where a user can easily visually recognize heating coil display part 11 and can explicitly understand which heating coil display part 11 displays.

Power source switching part 12 is an inputting part for turning on or off a main power source of the induction heating cooker. Heating power adjusting part 13 is formed of first heating power adjusting part 13a and second heating power adjusting part 13b. When first heating power adjusting part 13a is operated, a level of heating power in selected heating area 4 is increased, while when second heating power adjusting part 13b is operated, a level of heating power in selected heating area 4 is decreased.

Setting display part 14 is formed of: first setting display part 14a which displays a level of heating power set in first heating area 4a; and second setting display part 14b which displays a level of heating power set in second heating area 4b.

In this exemplary embodiment, setting display part 14b where heating is not set displays zero. However, when heating setting is not performed, setting display part 14b may be turned off or setting display part 14b may perform another display, and no restriction is imposed on setting display part 14b in the present invention. The display position of setting display part 14 is disposed outside heating coil display part 11. However, the display position of setting display part 14 may be disposed inside heating coil display part 11. Rather, by disposing setting display part 14 inside heating coil display part 11, a user can easily visually recognize the setting of the heating coil.

FIG. 3A to FIG. 3D are arrangement views as viewed from above the induction heating cooker showing a mode where object to be heated 15 is placed on heating area 4. When a transparent glass plate is used as top plate 2 described in FIG. 1, it is possible to confirm heating coil 3 at positions shown in FIG. 3A to FIG. 3D.

FIG. 3A shows a state where object to be heated 15 is correctly placed on heating area 4a. In this state, the detection is made by load detecting part 6 that object to be heated 15 is placed just above both first heating coil 3a and second heating coil 3b. Accordingly, an electric current of high frequency is supplied to both first heating coil 3a and second heating coil 3b from inverter circuit 5 and hence, a bottom surface of object to be heated 15 is heated uniformly without spot heating.

FIG. 3B shows a state where object to be heated 15 is placed in a state where object to be heated 15 slightly protrudes from heating area 4a. In this state, although the detection is made by load detecting part 6 that object to be heated 15 exists just above heating coil 3b, the detection is also made by load detecting part 6 that object to be heated 15 does not exist just above first heating coil 3a. Accordingly, an electric current of high frequency is not supplied to first heating coil 3a from inverter circuit 5 and an electric current of high frequency is supplied to only second heating coil 3b and hence, only a center portion of object to be heated 15 is heated whereby a portion of object to be heated 15 which is not placed just above second heating coil 3b is not heated, thus forming spots.

FIG. 3C shows a state where object to be heated 15 is placed on heating area 4a in such a manner that approximately one half of object to be heated 15 protrudes from heating area 4a. In this state, although the detection is made by load detecting part 6 that object to be heated 15 exists just above second heating coil 3b, the detection is also made by load detecting part 6 that object to be heated 15 does not exist just above first heating coil 3a. The detection is also made by load detecting part 6 that object to be heated 15 exists just above third heating coil 3c.

In FIG. 3D, although object to be heated 15 is placed within heating area 4a, a size of object to be heated 15 is only as large as a size of one heating coil 3 and hence, the detection is made by load detecting part 6 that object to be heated 15 is placed just above second heating coil 3b. However, the detection is made by load detecting part 6 that object to be heated 15 does not exist just above heating coil 3a. It is determined that this state conforms to an intension of a user and is a correct manner of operation, and object to be heated 15 is heated.

Next, the manner of operation in setting heating and displaying heating of a load will be described.

First, an operation of selecting heating coils by the operating part will be described. In induction heating cooker 100 according to this exemplary embodiment, when a user of induction heating cooker 100 touches power source switching part 12 disposed on operating part 7, all heating coil display parts 11 are turned on darkly and setting display part 14 displays zero.

Next, when the user touches first heating area selecting part 10a, first heating area 4a is selected, and brightnesses of first heating coil display part 11a and second heating coil display part 11b which respectively correspond to first heating coil 3a and second heating coil 3b which form first heating area 4a are increased, and first heating coil display part 11a and second heating coil display part 11b are lit brighter than third heating coil display part 11c and fourth heating coil display part 11d.

At this stage of operation, when the user touches second heating area selecting part 10b in the same manner, brightnesses of third heating coil display part 11c and fourth heating coil display part 11d are increased so that third heating coil display part 11c and fourth heating coil display part 11d are lit brightly (hereinafter this lighting state being referred to as bright lighting), while brightnesses of first heating coil display part 11a and second heating coil display part 11b are decreased and first heating coil display part 11a and second heating coil display part 11b are lit darkly (hereinafter this lighting state being referred to as dark lighting).

When the user touches first heating area selecting part 10a or second heating area selecting part 10b two times continuously, both first heating area 4a and second heating area 4b are selected. In this case, all of first heating coil display part 11a, second heating coil display part 11b, third heating coil display part 11c and fourth heating coil display part 11d performs bright lighting.

Further, when the user operates heating power adjusting part 13, first setting display part 14a displays a level of heating power, and a heating operation in first heating area 4a starts.

As described above, in this exemplary embodiment, heating area selecting part 10 is configured to select either one from three groups of heating coils by operating part 7, that is, two heating coils 3 (third heating coil 3c and fourth heating coil 3d) on an upper side (a depth side of the body), two heating coils 3 (first heating coil 3a and second heating coil 3b) on a lower side (a user side of the body) or all heating coils 3. In this case, it is preferable for heating area selecting part 10 that heating coils are selectable to satisfy the user friendliness. Accordingly, even when the selection of the heating coils is not limited to the above, provided that two or more heating coils 3 can be selected and heating coils 3 which are not selected are disposed around the selected heating area 4, the configuration can acquire substantially the same advantageous effects as this embodiment.

Next, an operation (first control operation) of the load detecting part and the control part will be described.

As described above, when heating area selecting part 10a is operated, operating part 7 performs bright lighting of first heating coil display part 11a and second heating coil display part 11b which correspond to selected first heating area 4a. Next, when heating power adjusting part 13 is operated, operating part 7 outputs set information to load detecting part 6 and control part 8 so as to start heating at a set heating power level.

When set information is inputted to control part 8 from operating part 7, control part 8 outputs heating information which conforms to inputted set information to inverter circuit 5. Inverter circuit 5 supplies an electric current of high frequency to first heating coil 3a and second heating coil 3b in accordance with inputted set information.

As described above, in this exemplary embodiment, when first heating area 4a is selected, for example, inverter circuit 5 supplies an electric current of high frequency to first heating coil 3a and second heating coil 3b simultaneously. However, the present invention is not limited to such a configuration. That is, it may be possible to adopt the configuration where an electric current of high frequency is supplied to first heating coil 3a and information relating to a coil current, an inter-coil voltage and the like are obtained and, thereafter, an electric current of high frequency is supplied to second heating coil 3b and information relating to a coil current and an inter-coil voltage and the like are obtained. Such a configuration can be used in common between the first heating coil 3a and the second heating coil 3b as the configuration for detecting a coil current and the configuration for detecting an inter-coil voltage. It is evident that such a configuration can also acquire substantially the same advantageous effects.

When inverter circuit 5 supplies an electric current of high frequency to respective heating coils 3 and outputs information relating to coil currents and inter-coil voltages of the respective heating coils 3 to load detecting part 6, load detecting part 6 detects whether or not object to be heated 15 which can be heated by induction heating exists just above respective heating coils 3, and outputs detected information to inverter circuit 5, control part 8 and non-load notifying part 9.

Hereinafter, the first control operation in the induction heating cooker having the above-mentioned configuration will be described.

When information (signal) from load detecting part 6 indicates that an object to be heated exists on all selected heating coils 3 (for example, the state shown in FIG. 3A), inverter circuit 5, in accordance with heating information inputted from control part 8, continues the supply of an electric current of high frequency to heating coils 3, operating part 7 also maintains a set state without changing a display content, control part 8 also maintains heating information to heating coils 3 without changing the heating information, and non-load notifying part 9 performs no operation.

Next, when information from load detecting part 6 indicates that an object to be heated does not exist above at least one of selected heating coils 3, for example, the arrangement as shown in FIG. 3B, inverter circuit 5 stops the supply of an electric current of high frequency to first heating coil 3a and second heating coil 3b. Upon reception of information transmitted from load detecting part 6, that is, output information of a state where object to be heated 15 does not exist above first heating coil 3a and the object to be heated exists above second heating coil 3b, control part 8 performs outputting of an instruction signal which makes load detecting part 6 continue the load detection of first heating coil 3a to inverter circuit 5 and load detecting part 6 for six seconds, and performs outputting of information which makes non-load notifying part 9 notify a state where object to be heated 15 does not exist above first heating coil 3a to non-load notifying part 9 for six seconds. Non-load notifying part 9, for example, notifies a user to pay attention to a state where a pan does not exist above first heating coil 3a by voices using a speaker (sound generating part) or the like. Non-load notifying part 9 further outputs information which notifies that a pan does not exist above first heating coil 3a to operating part 7. In response to an input from non-load notifying part 9, operating part 7 blinks first heating coil display part 11a so as to attract attention of a user and notifies of the non-existence of a pan.

When a user moves object to be heated 15 from the arrangement shown in FIG. 3B to the arrangement shown in FIG. 3A while inverter circuit 5 and load detecting part 6 detects the presence or non-presence of a load above heating coil 3a in response to an output from control part 8, load detecting part 6 detects object to be heated 15 above first heating coil 3a and outputs the detection information to control part 8. Control part 8 outputs an instruction of heating two heating coils selected by a user, that is, first heating coil 3a and second heating coil 3b to inverter circuit 5. Further, control part 8 outputs information that first heating coil 3a is changed to a load state from a non-load state to non-load notifying part 9. Non-load notifying part 9 stops the notification that a pan does not exist above first heating coil 3a and outputting of information which notifies that a pan does not exist above first heating coil 3a to operating part 7. Operating part 7 recognizes stopping of outputting from non-load notifying part 9, and returns a blinking display of first heating coil display part 11a to a bright lighting display.

On the other hand, although non-load notifying part 9 notifies a state where an object to be heated (load) does not exist above first heating coil 3a in a state where inverter circuit 5 and load detecting part 6 detect the presence or non-presence of the load above first heating coil 3a in response to an output from control part 8, six seconds elapses without a change in position of the object to be heated (load). In this case, control part 8 outputs a signal based on which heating is performed by only second heating coil 3b and heating by first heating coil 3a is stopped is outputted to inverter circuit 5. Control part 8 outputs a signal based on which the detection of a load at first heating coil 3a is stopped to load detecting part 6. Further, in order to output a signal based on which notification that a pan does not exist above first heating coil 3a to non-load notifying part 9 is stopped, non-load notifying part 9 stops outputting of a signal which notifies that a pan does not exist above first heating coil 3a to operating part 7, and operating part 7 stops blinking of first heating coil display part 11a.

Operating part 7 outputs information that although operating part 7 sets heating by first heating coil 3a and second heating coil 3b, a pan exists only on the second heating coil 3b, and six seconds pass in a state where a pan does not exist above first heating coil 3a and hence, heating is not performed by first heating coil 3a to operating part 7. Operating part 7 changes a display of first heating coil display part 11a from bright lighting which is a state where heating is selected to dark lighting where heating is not selected.

Next, an operation (second control operation) of the load detecting part and the control part will be described. First, in the second control operation, for example, in the arrangement shown in FIG. 3C, first heating area selecting part 10a which selects first heating area 4a is operated in operating part 7 so that bright lighting of first heating coil display part 11a and second heating coil display part 11b is performed. When heating power adjusting part 13 is operated, load detecting part 6 detects that object to be heated 15 does not exist above first heating coil 3a and object to be heated 15 exists above second heating coil 3b, and transmits information that first heating coil 3a is in a non-load state and second heating coil 3b is in a load state to inverter circuit 5, control part 8 and non-load notifying part 9.

Upon receiving information from load detecting part 6, inverter circuit 5 stops the supply of an electric current of high frequency to first heating coil 3a. Control part 8 transmits a signal which confirms whether or not object to be heated 15 exists just above third heating coil 3c disposed in second heating area 4b disposed adjacently to first heating area 4a to inverter circuit 5 and load detecting part 6. Non-load notifying part 9 has information on whether or not a load exists above heating coil 3c disposed in heating area 4b disposed adjacently to selected heating area 4a.

Inverter circuit 5 receives a signal from control part 8, supplies an electric current of high frequency to third heating coil 3c which is not selected by a user, stops the supply of an electric current of high frequency at a point of time when information on a coil current and an inter-coil voltage based on which load detecting part 6 can determine whether or not object to be heated 15 exists above third heating coil 3c is obtained, and transmits information on the coil current and the inter-coil voltage to load detecting part 6.

When object to be heated 15 is placed above third heating coil 3c in accordance with the arrangement shown in FIG. 3C, load detecting part 6 determines that object to be heated 15 exists just above third heating coil 3c based on information on a coil current and an inter-coil voltage obtained by the supply of an electric current of high frequency to third heating coil 3c from inverter circuit 5, and load detecting part 6 transmits information that a load exists above third heating coil 3c to control part 8 and non-load notifying part 9.

Next, upon reception of information transmitted from load detecting part 6, that is, information of a state where an object to be heated 15 does not exist above first heating coil 3a within selected first heating area 4a and the object to be heated exists above second heating coil 3b within selected first heating area and non-selected third heating coil 3c, control part 8 performs outputting of an instruction signal which makes load detecting part 6 continue the load detection of first heating coil 3a to inverter circuit 5 and load detecting part 6 for six seconds. Further, control part 8 performs outputting of information which makes non-load notifying part 9 notify a state where object to be heated 15 does not exist above first heating coil 3a to non-load notifying part 9 for six seconds. Non-load notifying part 9 notifies a user to pay attention to a state where a pan does not exist above first heating coil 3a by voices using a speaker (sound generating part) or the like. Non-load notifying part 9 further outputs information which notifies that a pan does not exist above first heating coil 3a to operating part 7. In response to an output from non-load notifying part 9, operating part 7 blinks first heating coil display part 11a so as to attract attention of a user and notifies of the non-existence of a pan.

Thereafter, operations in the respective blocks which are performed when a user moves the position of object to be heated 15 or does not move the position of object to be heated 15 during a period that load detecting part 6 is notifying a state where object to be heated 15 is not placed above first heating coil 3a (for example, six seconds) are equal to the above-mentioned first control operations.

On the other hand, for example, also in the arrangement shown in FIG. 3D, first heating area selecting part 10a which selects first heating area 4a is operated in operating part 7 so that bright lighting of first heating coil display part 11a and second heating coil display part 11b is performed. When heating power adjusting part 13 is operated, load detecting part 6 detects that object to be heated 15 does not exist above first heating coil 3a and object to be heated 15 exists above second heating coil 3b. Load detecting part 6 transmits information that first heating coil 3a is in a non-load state and second heating coil 3b is in a load state to inverter circuit 5, control part 8 and non-load notifying part 9.

Inverter circuit 5 receives information from load detecting part 6, and stops the supply of an electric current of high frequency to first heating coil 3a. Control part 8 transmits a signal which confirms whether or not object to be heated 15 exists just above third heating coil 3c disposed in second heating area 4b disposed adjacently to first heating area 4a to inverter circuit 5 and load detecting circuit 6. Non-load notifying part 9 has information on whether or not a load exists above third heating coil 3c disposed in second heating area 4b disposed adjacently to selected first heating area 4a.

Inverter circuit 5 receives a signal from control part 8, supplies an electric current of high frequency to third heating coil 3c, and transmits to load detecting part 6 information on a coil current and the inter-coil voltage based on which whether or not object to be heated 15 exists above third heating coil 3c can be determined.

When the arrangement shown in FIG. 3D is adopted, that is, when object to be heated 15 is not placed above third heating coil 3c, load detecting part 6 detects that object to be heated 15 does not exist above third heating coil 3c, and transmits such information to control part 8 and non-load notifying part 9.

Control part 8 obtains information transmitted from load detecting part 6, that is, information on a state where object to be heated 15 exists neither above first heating coil 3a within selected first heating area 4a nor above third heating coil 3c within second heating area 4b disposed adjacently to first heating area 4a and an object to be heated exists above second heating coil 3b within selected second heating area 4a, and determines that a size of object to be heated 15 placed on top plate 2 is substantially equal to a size of one heating coil 3. Further, control part 8 outputs information on a heating state to inverter circuit 5, load detecting part 6 and operating part 7 so as to change a heating state to a state where a heating operation by first heating coil 3a is stopped and heating is performed only by second heating coil 3b.

Depending on a heating state which control part 8 outputs, inverter circuit 5 supplies an electric current of high frequency to only second heating coil 3b. Load detecting part 6 continuously performs the detection of whether or not a load state is changed only with respect to heated second heating coil 3b. Operating part 7 changes a display mode from a bright lighting display where first heating coil display part 11a is selected to a dark lighting display where heating is not performed, and non-load notifying part 9 performs no operation.

That is, in the second control operation, unlike the first control operation, when object to be heated 15 does not exist just above at least one heating coil among heating coils 3 within selected heating area 4, the detection is made whether or not object to be heated 15 exists above heating coil 3 within heating area 4 disposed adjacently to heating area 4, and when object to be heated 15 exists, non-load notifying part 9 notifies that non-loaded heating coil 3 does not exist, and when object to be heated 15 does not exist, the notification by non-load notifying part 9 is not performed.

The arrangement shown in FIG. 3B becomes substantially equal to the arrangement shown in FIG. 3C by disposing second heating coil 3b and third heating coil 3c close to each other. Further, when a size of object to be heated 15 and a size of heating coil 3 become close to each other, the arrangement becomes substantially equal to the arrangement shown in FIG. 3D.

When load detecting part 6 determines that object to be heated 15 does not exist just above all of selected heating coils 3, control part 8 which receives such a determination signal outputs an instruction for making load detecting part 6 continue the detection whether or not a state where a load does not exist above heating coil 3 within selected area 4 is being held to inverter circuit 5 and load detecting part 6 for approximately one minute. Control part 8 also outputs a state where object to be heated 15 does not exist in all heating coils 3 within selected heating area 4 to non-load notifying part 9 for approximately one minute. Non-load notifying part 9 makes notification that object to be heated 15 does not exist above selected heating coil 3 to a user by voices using a speaker (sound generating part) or the like so as to attract an attention of the user. Non-load notifying part 9 also outputs information notifying operating part 7 that object to be heated 15 exists above none of heating coils 3 within selected heating area 4. Operating part 7 attracts attention of a user so as to notify that object to be heated 15 does not exist by blinking heating coil display part 11 which corresponds to heating coils 3 within heating area 4 selected by an output from non-load notifying part 9.

When a state where object to be heated 15 does not exist above heating coil 3 continues for approximately one minute, control part 8 initializes setting of heating power in selected heating area 4. In operating part 7, heating coil display part 11 which is performing bright lighting is returned to dark brightening, and a display content of setting display part 14 is also returned to a non-setting display.

In this manner, in this exemplary embodiment, a notifying time for notifying that object to be heated 15 exists above none of two or more heating coils 3 within selected heating area 4 may be set longer than a notifying time for notifying that object to be heated 15 does not exist above any one of two or more heating coils within selected heating area 4.

### (Second exemplary embodiment)

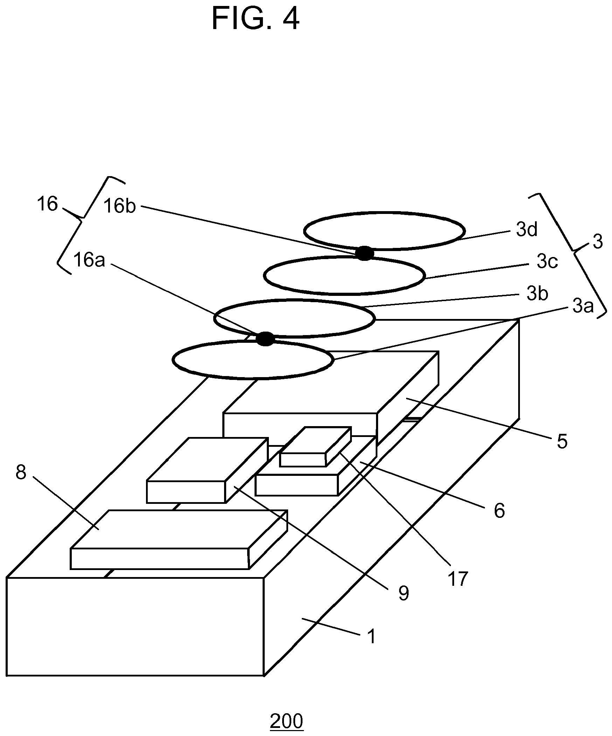

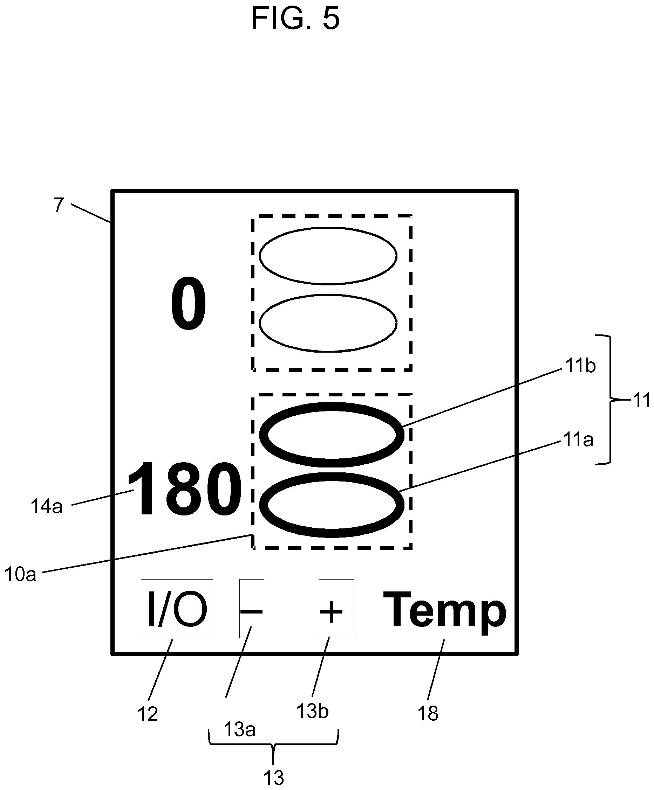

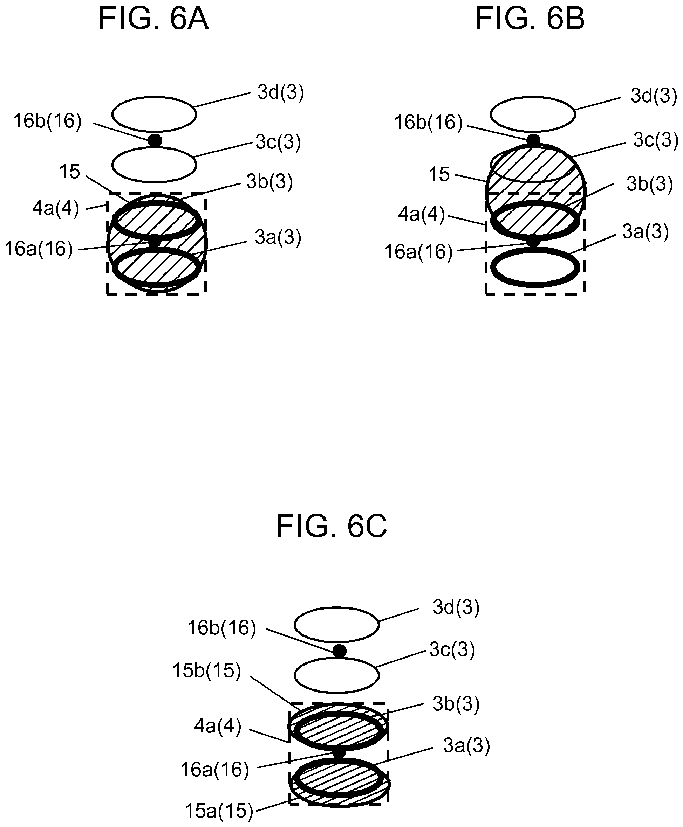

FIG. 4 is a schematic view showing a configuration of an induction heating cooker according to a second exemplary embodiment of the present invention. FIG. 5 is a schematic view showing a display of an operating part of the induction heating cooker according to the second exemplary embodiment of the present invention. FIG. 6A to FIG. 6C are schematic views showing arrangement examples of heating coils of the induction heating cooker and an object to be heated according to the second exemplary embodiment of the present invention.

First, the configuration of induction heating cooker 200 according to this exemplary embodiment will be described.

In induction heating cooker 200 shown in FIG. 6A to FIG. 6C, constitutional elements (blocks) substantially identical to the corresponding constitutional elements (blocks) shown in FIG. 1 are given same symbols. Temperature detecting element 16 is provided for respective heating areas 4 in such a manner that temperature detecting element 16 is disposed between heating coils 3 disposed adjacently to each other. To be more specific, for example, as shown in FIG. 6A, first temperature detecting element 16a is disposed between first heating coil 3a and second heating coil 3b, and second temperature detecting element 16b is disposed between third heating coil 3c and fourth heating coil 3d.

Temperature detecting element 16 is formed of an infrared-type temperature detecting element (hereinafter referred to as an infrared sensor) constituted of a photo diode or the like which can measure a temperature by detecting an amount of infrared rays irradiated from object to be heated 15. The infrared sensor detects a temperature of object to be heated 15 by way of (or through) top plate 2 or detects infrared rays (hereinafter referred to as disturbance light) incident from parts other than object to be heated 15, and outputs detected temperature data to temperature adjusting part 17.

In this exemplary embodiment, temperature detecting element 16 is formed of the infrared sensor constituted of a photo diode or the like which can measure a temperature by detecting an amount of infrared rays irradiated from object to be heated 15. However, temperature detecting element 16 may be formed of a temperature sensor such as a heat transmission type thermistor having only a function of detecting a temperature. Provided that temperature detecting element 16 is formed of an element which detects a temperature, such temperature detecting element 16 can acquire substantially the same advantageous effects acquired by this exemplary embodiment. Temperature adjusting part 17 is electrically connected to temperature detecting element 16, and is also electrically connected to inverter circuit 5, load detecting part 6 and control part 8. Temperature adjusting part 17 receives an amount of infrared rays of object to be heated 15 which is detected and outputted by temperature detecting element 16 and temperature data attributed to disturbance light as inputs, and outputs information on temperature adjustment to inverter circuit 5, load detecting part 6 and control part 8.

Inverter circuit 5 supplies an electric current of high frequency to the plurality of respective heating coils 3, and stops the supply of an electric current of high frequency at a point of time when load detecting part 6 acquires information on a coil current, an inter-coil voltage, and input power which flows into the inverter circuit for determining whether or not object to be heated 15 exists just above heating coils 3 or whether or not the materials of object to be heated 15 are equal to each other. Further, inverter circuit 5 outputs information such as a coil current, an inter-coil voltage and input power which flows into inverter circuit 5 obtained with respect to the plurality of respective heating coils 3 to load detecting part 6.

When object to be heated 15 is placed above selected heating coils 3 and is ready for being heated, inverter circuit 5 receives information from temperature adjusting part 17 as an input, and increases or decreases heating power or stops heating, thus adjusting heating power such that a temperature of object to be heated 15 becomes a set temperature. When information that abnormality is detected is inputted to inverter circuit 5 from load detecting part 6 and control part 8, heating power is lowered or heating is stopped, and outputs a state where heating power is being lowered or a state where heating is stopped to control part 8.

Load detecting part 6 receives, as an input, information from temperature adjusting part 17 and detects a load state such as whether or not a temperature of object to be heated 15 is correctly detected or whether or not abnormal temperature data which is already equal to or above a predetermined temperature is detected at a point of time when heating is started by inverter circuit 5, and outputs detected information to control part 8. Further, load detecting part 6 detects a load state such as whether or not a temperature of object to be heated 15 is normally elevated when heating is performed with a predetermined amount of electric power, whether or not object to be heated 15 has a shape which prevents the temperature adjustment due to infrared rays contained in disturbance light when a temperature of object to be heated 15 is not elevated, or a plurality of objects to be heated 15 exist within heating area 4, and load detecting part 6 outputs detected information to the control part 8.

Information from temperature adjusting part 17 is inputted to control part 8. Control part 8 comprehensively determines output information such as whether or not inverter circuit 5 is in a normally heated state or whether or not load detecting part 6 is in a state where load detecting part 6 can perform the normal temperature adjustment, and performs a control such as the continuation of heating in accordance with setting inputted from operating part 7 or a change of setting which differs from setting inputted from operating part 7. To be more specific, for example, control part 8 displays abnormality by operating part 7 so as to notify the abnormality to a user through stopping heating or the like, or control part 8 changes a display content to a display where it is notified that object to be heated 15 is not correctly placed above heating coils 3.

As shown in FIG. 4, induction heating cooker 200 according to this exemplary embodiment includes temperature adjusting part 17. As shown in FIG. 5, induction heating cooker 200 also includes temperature adjustment setting part 18 as an inputting part. Induction heating cooker 200 according to this exemplary embodiment, at the time of setting heating in heating area 4 selected by a user, sets not only a level of heating power but also a set temperature which is adjusted by operating temperature adjustment setting part 18 using heating power adjusting part 13. That is, induction heating cooker 200 has a function of adjusting a temperature of object to be heated 15 to a set value while heating object to be heated 15.

FIG. 6A to FIG. 6C are arrangement views as viewed from above the induction heating cooker showing a mode where object to be heated 15 is placed on top plate 2 shown in FIG. 1. When a transparent glass plate is used as top plate 2, it is possible to confirm heating coils 3, first heating area 4a and temperature detection element 16 at positions shown in FIG. 6A to FIG. 6C.

FIG. 6A shows a state where object to be heated 15 is correctly placed above first heating area 4a. In this state, the detection is made by load detecting part 6 that object to be heated 15 is placed just above both first heating coil 3a and second heating coil 3b. Accordingly, an electric current of high frequency is supplied to both first heating coil 3a and second heating coil 3b from inverter circuit 5 and hence, a bottom surface of object to be heated 15 is heated uniformly without spot heating. Further, in the arrangement example shown in FIG. 6A, first temperature detecting element 16a correctly detects a temperature of object to be heated 15 without being influenced by disturbance light.

FIG. 6B shows a state where object to be heated 15 is placed on heating area 4a in such a manner that approximately one half of object to be heated 15 protrudes from heating area 4a. In this state, although the detection is made by load detecting part 6 that object to be heated 15 exists just above heating coil 3b, the detection is also made by load detecting part 6 that object to be heated 15 does not exist just above heating coil 3a. The detection is made by load detecting part 6 that object to be heated 15 also exists just above heating coil 3c. Further, in such a state, first temperature detecting part 16a also cannot correctly detect a temperature of object to be heated 15, and also detects an amount of infrared rays contained in disturbance light other than infrared rays which object to be heated 15 radiates.

In FIG. 6C, first object to be heated 15a and second object to be heated 15b are placed above first heating area 4a. In FIG. 6C, first object to be heated 15a is placed just above first heating coil 3a and second object to be heated 15b is placed just above second heating coil 3b. However, neither first object to be heated 15a nor second object to be heated 15b is placed above first temperature detecting element 16a and hence, neither a temperature of first object to be heated 15a nor a temperature of second object to be heated 15b is correctly detected, and disturbance light is detected.

In this exemplary embodiment, first object to be heated 15a and second object to be heated 15b are made of different materials. For example, first object to be heated 15a is a pan where a heat generating element is embedded in a bottom surface of an aluminum base material, and second object to be heated 15b is a pan where a bottom surface is made of magnetic stainless steel. Even when a temperature of an object to be heated is detected in a state where either one of first object to be heated 15a or second object to be heated 15b is slightly placed above first temperature detecting element 16a, load detecting part 6 detects that pans placed above first heating coil 3a and second heating coil 3b are made of different materials, and control part 8 stops a heating operation which is accompanied with the operation of temperature adjusting part 17.

Next, the manner of operation in setting heating and displaying heating of a load will be described.

First, an operation of selecting heating coils by the operating part will be described. In induction heating cooker 200 according to this exemplary embodiment, when a user of induction heating cooker 200 touches power source switching part 12 disposed on operating part 7, all heating coil display part 11 are brought into dark lighting and setting display part 14 displays zero.

Next, when the user touches first heating area selecting part 10a, first heating area 4a is selected, and brightnesses of first heating coil display part 11a and second heating coil display part 11b which respectively correspond to first heating coil 3a and second heating coil 3b which form first heating area 4a are brought into bright lighting, and third heating coil display part 11c and fourth heating coil display part 11d continue dark lighting.

When temperature adjustment setting part 18 is operated, first setting display part 14a displays a set temperature. When first heating power adjusting part 13a or second heating power adjusting part 13b is operated, a set temperature which first setting display part 14a displays is increased or decreased. Operating part 7 outputs set information on heating area 4 and information on a level of temperature adjustment to control part 8 so that a heating operation accompanied with temperature adjustment is started.

As described above, in this exemplary embodiment, heating area selecting part 10 is configured to select either one from three groups of heating coils by operating part 7, that is, two heating coils 3 (third heating coil 3c and fourth heating coil 3d) on an upper side (a depth side of the body), two heating coils 3 (first heating coil 3a and second heating coil 3b) on a lower side (a user side of the body) or all heating coils 3. Induction heating cooker 200 according to this exemplary embodiment includes two or more heating coils 3, and a temperature detecting element is disposed between heating coils 3. In this case, it is preferable for heating area selecting part 10 that heating coils be selectable to satisfy the user friendliness, and the selection of the heating coils is not limited to the above-mentioned selection pattern. Accordingly, it is sufficient that two or more heating coils 3 and one or more temperature detecting elements can be selected. Further, when heating coils 3 which are not selected are disposed around the selected heating area 4, such configuration can also acquire substantially the same advantageous effects.

Next, an operation (third control operation) of the load detecting part and the control part will be described.

As described above, when a user selects first heating area 4a by operating part 7 and sets a temperature by operating temperature adjustment setting part 18, control part 8 receives set information from operating part 7, and outputs information such as selected heating area and set temperature to inverter circuit 5, load detecting part 6 and temperature adjusting part 17.

In the case where object to be heated 15 is disposed at the position shown in FIG. 6A, it is determined by load detecting part 6 that object to be heated 15 exists just above both first heating coil 3a and second heating coil 3b within first heating area 4a and materials of object to be heated 15 are equal, and load detecting part 6 outputs a detection result (information) to control part 8.

Temperature data is calculated based on an amount of infrared rays detected by first temperature detecting element 16a which is formed of the infrared sensor or the like. Temperature adjusting part 17 detects the temperature data and outputs the temperature data to load detecting part 6. When a temperature of object to be heated 15 is low at a point of time when heating is started, and the temperature of object to be heated 15 is elevated to a predetermined value or more after heating is started and inverter circuit 5 heats object to be heated 15 at a predetermined amount of electric power, load detecting part 6 determines that a temperature of object to be heated 15 is in a state where the temperature can be normally detected, and outputs a detection result (information) to control part 8.

Based on information outputted from load detecting part 6, control part 8 determines that it is possible to perform a heating operation to adjust the temperature of object to be heated 15 to a temperature set by operating part 7, and outputs a signal which performs a control so as to increase or decrease an amount of an electric current of high frequency to be supplied to first heating coil 3a and second heating coil 3b to inverter circuit 5 based on the temperature information from temperature adjusting part 17.

When object to be heated 15 is disposed at the position shown in FIG. 6B, load detecting part 6 detects a state where object to be heated 15 does not exist above first heating coil 3a and object to be heated 15 exists above second heating coil 3b and third heating coil 3c, and determines that object to be heated 15 does not exist above first temperature detecting element 16a. Then, load detecting part 6 outputs a detected determination result (information) to control part 8.

Based on information outputted from load detecting part 6, control part 8 determines that it is not possible to perform a heating operation to adjust the temperature of object to be heated 15 to a temperature set by operating part 7. In this case, control part 8 makes non-load notifying part 9 notify that object to be heated 15 does not exist above first heating coil 3a and object to be heated 15 exists above third heating coil 3c. Further, control part 8 outputs instruction information to inverter circuit 5 and load detecting part 6 respectively such that inverter circuit 5 and load detecting part 6 continuously perform the load detection at first heating coil 3a.

When load detecting part 6 detects no change in a load state of first heating coil 3a after the notification is continuously performed by non-load notifying part 9 for an approximately predetermined time, control part 8 makes inverter circuit 5 and load detecting part 6 stop the load detection. Control part 8 also outputs instruction information to non-load notifying part 9 so as to make non-load notifying part 9 stop the notification of a non-load. At the same time, control part 8 outputs instruction information to operating part 7 so as to make operating part 7 release the temperature adjustment setting made by a user and change a display mode to the display immediately after starting the supply of a power source.

On the other hand, in the case where object to be heated 15 is detected above first heating coil 3a during a time that the notification by non-load notifying part 9 is performed, and it is determined that a material of object to be heated 15 above first heating coil 3a and a material of object to be heated 15 above second heating coil 3b are equal, control part 8 determines that it is possible to perform a heating operation to adjust the temperature of object to be heated 15 to a temperature set by operating part 7. Control part 8 outputs instruction information which performs a control so as to increase or decrease an amount of an electric current of high frequency to be supplied to first heating coil 3a and second heating coil 3b in accordance with the temperature information from temperature adjusting part 17 to inverter circuit 5.

In the case where first object to be heated 15a and second object to be heated 15b are disposed at positions shown in FIG. 6C, load detecting part 6 determines that the object to be heated exists above first heating coil 3a and second heating coil 3b.

However, in the case where, based on the temperature information from temperature adjusting part 17, temperature data from first temperature detecting element 16a is a temperature of a predetermined value or more due to infrared rays contained in disturbance light before object to be heated 15 is heated by heating coil 3, and in the case where a temperature detected by first temperature detecting element 16a is not elevated to a predetermined value even when heating is performed with a predetermined electric power amount at a level which does not bring about sharp elevation of a temperature of an object to be heated and the like, load detecting part 6 determines that a temperature cannot be correctly detected due to the influence of disturbance light, and outputs a determination result (information) to control part 8.

Based on information outputted from load detecting part 6, control part 8 determines that it is not possible to perform a heating operation to adjust the temperature of object to be heated 15 to a temperature set by operating part 7, and outputs instruction information to non-load notifying part 9 so as to make non-load notifying part 9 notify that the object to be heated is not appropriate. Control part 8 also outputs instruction information to inverter circuit 5 and load detecting part 6 so as to make load detecting part 6 intermittently continue detection whether or not an object to be heated is continuously placed above first heating coil 3a and second heating coil 3b.

Load detecting part 6 has a function of detecting materials by which bottom surfaces of first object to be heated 15a and second object to be heated 15b which are placed above heating coils 3 are made. In the case where first object to be heated 15a is a pan where a heat generating element is embedded in a bottom surface of an aluminum base material, and second object to be heated 15b is a pan where a bottom surface is made of magnetic stainless steel, when the same coil current is supplied to first heating coil 3a just above which first object to be heated 15a is placed and second heating coil 3b just above which second object to be heated 15b is placed, input electric power to inverter circuit 5 differs between first heating coil 3a and second heating coil 3b. To be more specific, input electric power to inverter circuit 5 is larger in the case where the coil current is supplied to second heating coil 3b than the case where the coil current is supplied to first heating coil 3a and hence, the difference in material can be determined. Load detecting part 6 detects that objects to be heated having two materials respectively are placed within one heating area and this arrangement of objects to be heated is not appropriate for performing heating using temperature adjusting part 17, and outputs this information to control part 8.

When information is outputted to control part 8 from load detecting part 6 that two objects to be heated are placed within one heating area 4 so that a heating operation by temperature adjusting part 17 cannot be performed, control part 8 notifies a user of the state by outputting a signal on the information to non-load notifying part 9. Simultaneously, control part 8 continuously outputs an instruction which makes inverter circuit 5 and load detecting part 6 continuously detect materials of objects to be heated just above first heating coil 3a and second heating coil 3b.

Upon receiving the information that two objects to be heated are placed within one heating area from control part 8, non-load notifying part 9 notifies a user by voice using a speaker (sound generating part) or the like which non-load notifying part 9 includes that when a plurality of objects to be heated are simultaneously placed within one heating area, the adjustment of heating power by temperature adjusting part 17 while detecting a temperature cannot be performed. Non-load notifying part 9 outputs a signal which displays that different objects to be heated are respectively placed above first heating coil 3a and second heating coil 3b to operating part 7.

Upon receiving a signal from non-load notifying part 9, in order to make a user understand visually that pans made of different materials are placed above first heating coil 3a and second heating coil 3b, operating part 7 makes first heating coil display part 11a and second heating coil display part 11b change display colors, intervals of blinking, timings of blinking or the like which correspond to first heating coil 3a and second heating coil 3b in operating part 7.

Next, other configurations of the inverter circuit and the control part will be described.

In induction heating cooker 200 according to this exemplary embodiment, when it is determined that an object to be heated does not exist above at least one heating coil among selected heating coils 3, control part 8 and inverter circuit 5 temporarily stop the supply of an electric current of high frequency to the heating coil which is determined to be the heating coil above which the object to be heated does not exist.

In this exemplary embodiment, control part 8 may be configured such that inverter circuit 5 is not operated by load detecting part 6, the presence or non-presence of object to be heated is detected by a coil, an electrode and the like for detecting a load which are provided separately, and the supply of electric power is stopped only after a lapse of a predetermined time from a point of time that object to be heated 15 does not exist just above the heating coil. Control part 8 may be also configured such that, during a period until the supply of electric power is stopped as described above, heating coil display part 11 which corresponds to heating coil 3 which is determined to be a heating coil just above which object to be heated 15 does not exist or heating coil 3 above which object to be heated 15 made of a different material is placed is made to blink. With such configuration, it is possible to notify a user of the non-alignment between the position of object to be heated 15 and the position of heating coil 3 within selected heating area 4. When there is an error with respect to the position where object to be heated 15 is placed, a user is given an extension time for correcting the position where object to be heated 15 is to be placed by this notification.

When heating area 4 is selected within a range larger than object to be heated 15, with respect to heating coil 3 which is determined that object to be heated 15 does not exist just above heating coil 3, the supply of electric power is automatically stopped by leaving heating coil 3 as it is.

In induction heating cooker 200 according to this exemplary embodiment, from a point of time that operating part 7 which corresponds to heating coil 3 expected to be used is operated (selected) to a point of time that heating is actually started, a standby time may be set for a predetermined time. Induction heating cooker 200 according to this embodiment may be configured such that a heating start operating part is separately provided, and heating is started after the heating start operating part is operated.

With such configuration, in the case where a user operates (selects) operating part 7 which corresponds to heating coil 3 expected to be used, even when a selection state which differs from the intension of the user takes place due to an operational error or the like, the user can perform the selection operation again during a period until heating is started. Accordingly, in induction heating cooker 200 according to this exemplary embodiment, it is possible to prevent a failure in cooking such as heating spots or scorching of a cooked object which occurs when an object to be heated (load) such as a pan is placed at an erroneous position, thus providing a reliable operation system which a user can easily handle.

As described above, in induction heating cooker 200 according to this exemplary embodiment, the plurality of heating coils which are expected to be used are preliminarily selected, and when an object to be heated does not exist just above at least one heating coil among heating coils 3 within the selected heating area, the heating coil display part of the operating part or the like notifies of the heating coil above which an object to be heated does not exist. Accordingly, a user can correct the position of the object to be heated so that a failure in cooking such as heating spots or scorching of a cooked object can be prevented.

In induction heating cooker 200 according to this exemplary embodiment, the detection of objects to be heated is performed only with respect to heating coils within the heating area expected to be used which a user preliminarily selects and heating coils disposed adjacently to the heating area expected to be used. That is, in induction heating cooker 200 according to this exemplary embodiment, the detection of objects to be heated is not performed with respect to heating coils which are not selected as objects to be heated and are not disposed adjacently to the heating area to be heated.

Accordingly, in induction heating cooker 200 according to this exemplary embodiment, power consumption, heat generation of the inverter and heating coil and the undesired heat radiation can be reduced, and a time necessary for load detection can be shortened. It becomes easy for a user to make his image of a range of the (plurality of) heating areas 4 and heating coils 3 to be actually heated and his image of an operating range on operating part 7 and heating area selecting part 10 agree with each other. That is, the user can intuitively understand a position (place) to be selected for heating the heating coils.

In induction heating cooker 200 according to this exemplary embodiment, when a user selects the heating coil expected to be used, it is unnecessary to preliminarily correctly understand a size of the object to be heated. That is, it is sufficient that the user select the heating area having a range slightly larger than a range of the object to be heated. Further, in induction heating cooker 200 according to this exemplary embodiment, among the heating coil within the selected range, it is possible to automatically exclude (that is, stop) the heating coil which is determined as the heating coil which does not heat an object to be heated, that is, the heating coil which is determined as the heating coil just above which the object to be heated does not exist. Further, in induction heating cooker 200 according to this exemplary embodiment, a heating range can be selected with a simple operation, and power consumption, heat generation of the inverter and the heating coil and undesired heat radiation can be suppressed, and a time necessary for load detection can be shortened.

As has been described heretofore, an induction heating cooker according to one example of an embodiment of the present invention includes: a body; a top plate on which an object to be heated is placed; a plurality of heating coils disposed below the top plate and configured to heat the object to be heated; and a plurality of heating areas formed on the top plate and configured to indicate a position where the object to be heated is placed. The induction heating cooker according to one example of the exemplary embodiment of the present invention further includes: a load detecting part which detects that the object to be heated is placed above the plurality of respective heating coils; an operating part which selects the heating area to be heated from the plurality of heating areas; and a coil display part which displays operation states of the plurality of heating coils. The induction heating cooker according to one example of the exemplary embodiment of the present invention further includes a control part which controls operations of the load detecting part and the coil display part. In the induction heating cooker according to one example of the exemplary embodiment of the present invention, among the plurality of heating coils, two or more heating coils are disposed below the plurality of respective heating areas. The coil display part has display parts which correspond to the plurality of respective heating coils. The coil display part, when the heating area to be heated is selected by the operating part from the plurality of heating areas, performs a display such that the selected heating areas are selected as the heating areas to be heated by the display parts which correspond to two or more heating coils disposed within the selected heating area. The load detecting part detects whether or not an object to be heated exists above two or more respective heating coils within the selected heating area. When the load detecting part detects that an object to be heated exists above at least one of two or more heating coils within the selected heating area, the control part outputs to the coil display part an instruction signal which makes the display part corresponding to the heating coil above which the object to be heated is placed, among two or more heating coils, continue the display where the heating coil above which an object to be heated is placed is selected as the heating coil to be heated. Further, when the load detecting part detects that an object to be heated does not exist above either one of two or more heating coils within the selected heating area, the control part changes a display indicating that heating is selected in the display part which corresponds to the heating coil above which the object to be heated does not exist, and outputs an instruction signal which makes the non-load notifying part notify that the heating coil is in a non-load state. The control part further outputs an instruction signal which changes the display state to a display indicating that the heating coil above which the object to be heated does not exist is not selected as the heating coil to be heated to the coil display part.

With such configuration, a user can preliminarily select the heating coils to be used from the plurality of heating coils. Among the selected heating coils, when an object to be heated (load) such as a pan is not placed just above some heating coils, the display is changed from a display of selected heating coils to a display of actually heated heating coils after notifying that the heating coils are partially in a non-load state. Accordingly, even when an object to be heated is placed in a protruding manner from the heating area, a user can recognize the existence of the heating coils which are not heated within the set heating area and can accurately rearrange the position of the object to be heated. Further, it is possible to prevent a failure in cooking such as heating spots or scorching of a cooked object which occurs when an object to be heated (load) such as a pan is placed on an erroneous position.

Further, with such configuration, in the case where one object to be heated is heated by the plurality of preliminarily designated heating coils, when a display state is changed from a state where some of the designated heating coils are displayed as the heating coils to be heated to a state where some of the designated heating coils are displayed as the heating coils to be actually heated (that is, the heating coil above which the object to be heated is placed), it is possible to notify a user that some of the designated heating coils are in a non-load state by the non-load notifying part which notifies of the existence of the non-load state where the object to be heated is not placed above the heating coil. Accordingly, a user can correct the position of the object to be heated and hence, it is possible to prevent the occurrence of heating spots and a failure in cooking such as scorching of a cooked object.

With such configuration, a load detection is performed such that a selected state is displayed with respect to the heating coils selected by the user. Based on the load detection, a selection state is released with respect to some heating coils just above which an object to be heated (load) such as a pan does not exist so that it is possible to notify the user that the object to be heated (load) does not exist above some heating coils before performing heating.

The coil display part performs a display in the vicinity of the operating part corresponding to the respective heating coils. Accordingly, it becomes easy for a user to make his image of a range of heating coils to be actually heated and his image of an operating range on the operating part agree with each other. The user can intuitively understand a position to be selected for heating the heating coils so that the user can select the heating coil with a simple operation.

A load can be detected only with respect to the heating coils in the designated heating area and the heating coils disposed around the heating area and hence, it is unnecessary to perform a load detection with respect to the heating coils which are not expected to be heated. Accordingly, the power consumption, the heat generation in inverters and heating coils and undesired heat radiation can be suppressed and, at the same time, a time required for performing load detection can be shortened.

In the induction heating cooker according to one example of the exemplary embodiment of the present invention, when the load detecting part detects a state where an object to be heated does not exist above at least one of two or more respective heating coils within the selected heating area, the control part notifies that the heating coil above which the object to be heated does not exist is selected by the coil display part. The control part may be configured such that the control part makes the load detecting part continuously detect the presence or non-presence of the object to be heated with respect to the heating coils which are detected by the load detecting part as the heating coils above which the object to be heated does not exist during a period that the selection of the heating coil above which the object to be heated does not exist is notified. When the load detecting part detects that a state of the object to be heated is changed to a state where the object to be heated exists above all heating coils within the selected heating area during a period that the selection of the heating coils above which the object to be heated does not exist is notified, the control part may output an instruction signal so as to stop the notification that there are heating coils in a non-load state, and output an instruction signal so as to perform heating by the heating coils within the selected area and to make the coil display part perform a display where heating is selected.

With such configuration, when the object to be heated does not exist just above at least one heating coil among two or more heating coils selected by a user, it is possible to continuously perform the load detection at the heating coil in a non-load state while notifying the user of the presence of the heating coil in a non-load state. Accordingly, the user is aware of the notification made by the non-load notifying part. After the place of the object to be heated (load) is accurately corrected, it is unnecessary to perform again the selection of the heating area and the setting of heating, and heating can be performed continuously as it is in accordance with preceding setting. Accordingly, power consumption and undesired heat radiation can be suppressed.

In the induction heating cooker according to one example of the exemplary embodiment of the present invention, in the case where it is detected that an object to be heated exists above none of the selected heating coils, a notification time during which notification is made that the object to be heated exists above none of two or more heating coils disposed within the selected heating area may be set longer than a notification time during which notification is made that the object to be heated does not exist above at least one of two or more heating coils disposed within the selected heating area.

With such configuration, in the case where an object to be heated (load) such as a pan smaller than the heating area is heated and in the case where an object to be heated (load) is disposed in the vicinity of the selected heating area and a portion of the object to be heated is intentionally heated, a time during which the non-load notifying part notifies of the heating coil above which the object to be heated (load) does not exist can be shortened so that heating cooking can be started readily. On the other hand, in the case where object to be heated exists above none of heating coils such as a case where a user is still preparing an object to be heated (load) so that the object to be heated (load) does not exist near the induction heating cooker, a time during which the non-load notifying part notifies that the object to be heated (load) does not exist above the heating coil can be prolonged so that it is possible to stand until the object to be heated (load) is placed just above the selected heating area. Accordingly, by merely properly placing the object to be heated (load) while maintaining setting of the heating area which a user sets and setting of heating, it is possible to start intended heating in a short time.

In the induction heating cooker according to one example of the exemplary embodiment of the present invention, when the detection is made that the object to be heated does not exist above at least one of the two or more heating coils disposed within the selected heating area, the load detecting part may detect whether or not the object to be heated exists above two or more heating coils disposed within the heating area disposed adjacently to the selected heating area among the plurality of heating areas. In this case, when the load detecting part detects that the object to be heated exists above two or more heating coils arranged in the heating area disposed adjacently to the selected heating area, the control part outputs an instruction signal which notifies that the heating coil above which the object to be heated does not exist is disposed within the selected heating area. When the load detecting part detects that the object to be heated does not exist above the two or more heating coils arranged in the heating area disposed adjacently to the selected heating area, the control part does not output an instruction signal which notifies that the selected heating area is in a non-load state, and the control part outputs an instruction signal which makes the coil display part change a display mode from a display of a state where one heating coil is selected as the heating coil to be heated to a display where another heating coil which is detected as the heating coil above which the object to be heated exists is the heating coil to be heated.

With such configuration, when an object to be heated (load) which is smaller than the heating area selected by a user is heated, the notification by the non-load notifying part is eliminated, and a heating operation can be readily performed. Further, when a pan is placed such that the pan protrudes from the heating area selected by a user, the non-load notifying part notifies the user that the object to be heated (load) is placed in an offset manner from the selected heating area and hence, the non-load notifying part can guide a user to move the object to be heated (load) to the correctly selected heating area. Accordingly, it is possible to prevent a failure in cooking such as heating spots or scorching of a cooked object which occurs when an object to be heated (load) such as a pan is placed on an erroneous position. Further, power consumption, the heat generation and undesired heat radiation can be suppressed.

The induction heating cooker according to one example of the exemplary embodiment of the present invention may further include: the temperature detecting element disposed within the selected heating area; and the temperature adjusting part which is configured to adjust a temperature of the object to be heated placed on the top plate based on the temperature information from the temperature detecting element. In this case, the temperature detecting element is disposed between the heating coils disposed adjacently to each other among two or more heating coils disposed within the selected heated areas, and the induction heating cooker may be configured to perform heating by the temperature adjusting part when the load detecting part detects that the object to be heated exists above the two or more respective heating coils disposed within the selected heating area.

With such configuration, in the case where an object to be heated such as a pan is heated within the heating area selected by a user while performing the temperature adjustment of the object to be heated, a state is provided where an object to be heated (load) does not exist above at least two heating coils disposed on both sides of the temperature detecting element. For example, a state where an object to be heated is heated by one heating coil or a state where a temperature of an object to be heated is detected by a temperature detecting element disposed outside the heating coil. With such configuration, it is possible to prevent the occurrence of a failure in cooking such as a case where a bottom surface temperature of an object to be heated (load) on an outer side which is not heated by the heated coil is detected, and a temperature adjustment is performed based on the detection information so that a temperature of an object to be heated (load) heated by one heating coil becomes higher than a set temperature whereby scorching of a cooked object and heating spots are generated.

In the induction heating cooker according to one example of the exemplary embodiment of the present invention, the non-load notifying part further includes the sound generating part, and the induction heating cooker may be configured such that, in addition to the display by the coil display part, the non-load notifying part notifies that the object to be heated is not placed above either one of the two or more heating coils disposed within the selected heating area by the sound generating part.

With such configuration, when an object to be heated is not placed at a correct position with respect to the heating area selected by a user, it is possible to perform proper notification to the user so as to make the user correct the position of the object to be heated.

The induction heating cooker according to one example of the exemplary embodiment of the present invention may be configured such that the presence or non-presence of the object to be heated is detected based on the temperature information detected by the temperature detecting element, and in the case where the load detecting part detects that the object to be heated exists above the two or more respective heating coils within the selected heating area, heating by the temperature adjusting part is performed when a temperature elevation of the object to be heated detected by the temperature detecting element is equal to or above a predetermined value, and heating power of heating by the temperature adjusting part is lowered or heating is stopped when the temperature of the object to be heated detected by the temperature detecting element is below the predetermined value.

With such configuration, even in the case where it is determined that an object to be heated is placed just above two or more heating coils disposed within the heating area selected by a user, when a bottom surfaced is warped, an object to be heated having a cavity at the center thereof is disposed or a plurality of objects to be heated are placed above a designated heating coil, a temperature of the object to be heated cannot be detected. Accordingly, it is possible to prevent a temperature of an object to be heated (load) from becoming extremely high by lowering heating power or by stopping heating.

In the induction heating cooker according to one example of the exemplary embodiment of the present invention, the temperature detecting element may be configured to detect a temperature by detecting an amount of infrared rays. In this case, in the case where the load detecting part detects that the object to be heated exists above the two or more respective heating coils disposed within the selected heating area, heating by the temperature adjusting part may be performed when the temperature detecting element does not detect the amount of infrared rays which is equal to or more than a predetermined value at a point of time when an electric current of high frequency is supplied to two or more heating coils or when a change in a detection amount of infrared rays after a predetermined amount of electric current of high frequency is supplied to the heating coil is equal to or more than a predetermined value.

With such configuration, in the case where heating is performed within the heating area selected by a user, even when it is determined that an object to be heated is placed just above two or more heating coils disposed within the selected heating area, it is possible to prevent the following drawbacks. That is, when a pan having a cavity at the center of an object to be heated (load) is placed, when a plurality of pans are placed above a designated heating coil or when infrared rays (hereinafter being referred to as disturbance light) are received from objects other than an object to be heated such as a pan (for example, indoor illumination light or sunbeam), it is possible to prevent a drawback caused by incorrect detection of a temperature of an object to be heated (load) by an infrared sensor. For example, when an amount of infrared rays equal to or more than a predetermined value is detected due to disturbance light entering from the outside other than the object to be heated (load), or when an increment of detected infrared rays is a predetermined value or less even when heating is performed with predetermined electric power, it is possible to prevent a temperature of the object to be heated (load) from becoming abnormally high by lowering heating power or by stopping heating. Accordingly, it is possible to suppress power consumption, heat generation and undesired heat radiation. Further, when the infrared sensor correctly detects a temperature of an object to be heated (load), heating by the temperature adjusting part can be performed.

In the induction heating cooker according to one example of the exemplary embodiment of the present invention, the load detecting part may be configured to perform determination of materials of the objects to be heated, and heating by the temperature adjusting part may be performed when the load detecting part determines that the materials of the objects to be heated placed above two or more respective heating coils disposed within the selected heating area are equal to each other, and the heating by the temperature adjusting part may not be performed when the load detecting part determines that the materials of the objects to be heated placed above two or more respective heating coils disposed within the selected heating area are different from each other.

With such configuration, even in the case where it is determined that objects to be heated (load) are placed just above two or more heating coils disposed within the heating area selected by a user, when materials of the objects to be heated (loads) which are placed just above the respective heating coils differ from each other, it is determined that two or more objects to be heated (load) are heated and hence, it is possible to prevent a temperature of an object to be heated (loads) from becoming abnormally high because of incorrect detection of a temperature of an object to be heated (load) by stopping heating. Accordingly, heating spots or the like can be prevented and, at the same time, power consumption, heat generation and undesired heat radiation can be suppressed.

As has been described in conjunction with the examples of the exemplary embodiments, according to the present invention, it is possible to provide an induction heating cooker where a plurality of heating coils expected to be used are preliminarily selected. When an object to be heated does not exist just above the heating coil within the selected heating area, the heating coil display part or the like of the operating part notifies the user that the heating coil above which the object to be heated does not exist is present, and notifies of the heating coil which is determined as the heating coil above which the object to be heated does not exist so that a user can correct the position of the object to be heated. Further, according to the present invention, it is possible to provide an induction heating cooker which can prevent a failure in cooking such as heating spots or scorching of a cooked object and, at the same time, can suppress power consumption, heat generation and undesired heat radiation.

### INDUSTRIAL APPLICABILITY

As has been described heretofore, the present invention provides an induction heating cooker which can prevent a failure in cooking such as heating spots and scorching of a cooked object or the like caused by erroneous placement of an object to be heated such as a pan, and can suppress power consumption, heat generation and undesired irradiation. Accordingly, the induction heating cooker can be broadly used as heating equipment for household use and business use which has a plurality of heating coils.

### REFERENCE MARKS IN THE DRAWINGS

1: body
2: top plate
3, 3a, 3b, 3c, 3d: heating coil
4, 4a, 4b: heating area
5: inverter circuit
6: load detecting part
7: operating part
8: control part
9: non-load notifying part
10, 10a, 10b: heating area selecting (inputting) part
11, 11a, 11b, 11c, 11d: heating coil display part (coil display part)
12: power source switching (inputting) part
13, 13a, 13b: heating power adjusting (inputting) part
14, 14a, 14b: setting display part
15: object to be heated (load)
15a: first object to be heated (load)
15b: second object to be heated (load)
16, 16a, 16b: temperature detecting element
17: temperature adjusting part
18: temperature adjustment setting (inputting) part

## Claims

1. An induction heating cooker (100) comprising:
a body (1);
a top plate (2) on which an object to be heated is placed;
a plurality of heating coils (3) which are disposed below the top plate (2) and are configured to heat the object to be heated;
a plurality of heating areas (4a, 4b) which are formed on the top plate (2) and are configured to indicate a position where the object to be heated is placed;
a load detecting part (6) which detects that the object to be heated is placed above the plurality of respective heating coils (3);
a non-load notifying part (9) which notifies that the object to be heated is not placed above at least one of the plurality of heating coils (3) based on a detection result of the load detecting part (6);
an operating part (7) which selects the heating area (4) to be heated from the plurality of heating areas (4a, 4b);
a coil display part (11) which displays operation states of the plurality of respective heating coils (3); and
a control part (8) which controls operations of the load detecting part (6) and the coil display part (11);
**characterized in that**
among the plurality of heating coils (3), two or more heating coils (3) are disposed below the plurality of respective heating areas (4a, 4b);
the coil display part (11) has display parts which correspond to the plurality of respective heating coils (3);
the coil display part (11) is configured to, when the heating area (4) to be heated is selected by the operating part (7) from the plurality of heating areas (4a, 4b), indicate, by the display parts which correspond to the two or more heating coils (3) disposed within the selected heating area (4), that the selected heating area (4) is selected as the heating area to be heated (4);
the load detecting part (6) detects whether or not the object to be heated exists above the two or more respective heating coils (3) within the selected heating area (4);
the control part (8) is configured such that, when the load detecting part (6) detects that the object to be heated exists above at least one of the two or more heating coils (3) within the selected heating area (4), the control part (8) outputs to the coil display part (11) an instruction signal which makes the display part which corresponds to the heating coil (3) above which the object to be heated is placed among the two or more heating coils (3) continue the display where the heating coil (3) above which the object to be heated is placed is selected as the heating coil (3) to be heated; and
the control part (8) is configured such that, when the load detecting part (6) detects that the object to be heated does not exist above the two or more heating coils (3) within the selected heating area (4), the control part (8) outputs to the coil display part (11) an instruction signal which makes the display part corresponding to the heating coil (3) above which the object to be heated does not exist change a display indicating that heating is selected, makes the non-load notifying part (9) notify of a state that the heating coil (3) is in a non-load state, and makes the display part (11) change the display to a display indicating that the heating coil (11) above which the object to be heated does not exist is not selected as the heating coil (3) to be heated.

2. The induction heating cooker (100) according to claim 1, wherein
the control part (8) is configured such that, when the load detecting part (6) detects that the object to be heated does not exist above at least one of the two or more respective heating coils (3) within the selected heating area (4), the control part (8) outputs an instruction signal which notifies that the heating coil (3) above which the object to be heated does not exist is selected, and the control part (8) outputs an instruction signal which makes the load detecting part (6) continuously detect presence or non-presence of the object to be heated at the heating coil (3) which is detected as the heating coil (3) above which the object to be heated does not exist during a period that the selection of the heating coil (3) above which the object to be heated does not exist is notified, and
the control part (8) is configured such that, when the load detecting part (6) detects that a state of the object to be heated is changed to a state where the object to be heated exists above all of the two or more heating coils (3) within the selected heating area (4) during a period that the selection of the heating coils (3) above which the object to be heated does not exist is notified, the control part (8) outputs an instruction signal so as to stop the notification that the heating coils (3) are in a non-load state, and outputs an instruction signal so as to perform heating by the two or more heating coils (3) within the selected heating area (4) and to make the coil display part (11) perform a display where heating is selected with respect to the two or more heating coils (3) within the selected heating area (4).

3. The induction heating cooker (100) according to claim 1 or 2, wherein
a notification time during which notification is made that the object to be heated exists above none of the two or more heating coils (3) within the selected heating area (4) is set longer than a notification time during which notification is made that the object to be heated does not exist above any one of the two or more heating coils (3) within the selected heating area (4).

4. The induction heating cooker (100) according to any one of claims 1 to 3, wherein
when the detection is made that the object to be heated does not exist above at least one of the two or more heating coils (3) within the selected heating area (4), the load detecting part (6) detects whether or not the object to be heated exists above two or more heating coils (3) arranged in the heating area (4) disposed adjacently to the selected heating area (4) among the plurality of heating areas (4a, 4b),
when the load detecting part (6) detects that the object to be heated exists above the two or more heating coils (3) arranged in the heating area (4) disposed adjacently to the selected heating area (4), the control part (8) outputs an instruction signal which notifies that the heating coil (3) which is detected as the heating coil (3) above which the object to be heated does not exist is present within the selected heating area (4) by the non-load notifying part (9),
when the load detecting part (6) detects that the object to be heated does not exist above the two or more heating coils (3) arranged in the heating area (4) disposed adjacently to the selected heating area (4), the control part (8) does not output an instruction signal which notifies that the selected heating area (4) is in a non-load state, and
the control part (8) is configured to make the coil display part (11) change a display mode from a display of a state where the heating coil (3) is selected as the heating coil (3) to be heated to a display where the heating coil (3) which is detected as the heating coil (3) above which the object to be heated exists is the heating coil (3) to be heated.

5. The induction heating cooker (100) according to any one of claims 1 to 4, further comprising:
a temperature detecting element (16) disposed within the selected heating area (4); and a temperature adjusting part (17) which is configured to adjust a temperature of the object to be heated placed on the top plate (2) based on temperature information from the temperature detecting element (16),
wherein
the temperature detecting element (16) is disposed between the heating coils (3) disposed adjacently to each other among the two or more heating coils (3) within the selected heating areas (4), and the temperature adjusting part (17) is configured to perform heating when the load detecting part (6) detects that the object to be heated exists above the respective heating coils (3) disposed adjacently to each other.

6. The induction heating cooker (100) according to any one of claims 1 to 5, wherein
the non-load notifying part (9) further includes a sound generating part, and
in addition to the display by the coil display part (11), the sound generating part notifies that the object to be heated is not placed above either one of the two or more heating coils (3) disposed within the selected heating area (4).

7. The induction heating cooker (100) according to claim 5 or 6, wherein
the presence or non-presence of the object to be heated is detected based on temperature information detected by the temperature detecting element (16), and
in a case where the load detecting part (6) detects that the object to be heated exists above the two or more respective heating coils (3) within the selected heating area (4), heating by the temperature adjusting part (17) is performed when a temperature elevation of a temperature of the object to be heated detected by the temperature detecting element (16) is equal to or above a predetermined value, and heating power of heating by the temperature adjusting part (17) is lowered or heating is stopped when the temperature elevation of the temperature of the object to be heated detected by the temperature detecting element (16) is below the predetermined value.

8. The induction heating cooker (100) according to any one of claims 5 to 7, wherein
the temperature detecting element (16) is configured to detect a temperature by detecting an amount of infrared rays, and
in a case where the load detecting part (6) detects that the object to be heated exists above the two or more respective heating coils (3) within the selected heating area (4),
heating by the temperature adjusting part (17) is performed when the temperature detecting element (16) does not detect the amount of infrared rays which is equal to or more than a predetermined value at a point of time when an electric current of high frequency is supplied to the two or more heating coils (3) or when a change in a detection amount of infrared rays between before and after a predetermined amount of electric current of high frequency is supplied to the two or more heating coils (3) is equal to or more than a predetermined value.

9. The induction heating cooker (100) according to any one of claims 5 to 8, wherein
the load detecting part (6) is configured to perform determination of materials of the objects to be heated, and
heating by the temperature adjusting part (17) is performed when the load detecting part (6) determines that the materials of the objects to be heated placed above the two or more respective heating coils (3) disposed within the selected heating area (4) are equal to each other, and the heating by the temperature adjusting part (17) is not performed when the load detecting part (6) determines that the materials of the objects to be heated placed above the two or more respective heating coils (3) disposed within the selected heating area (4) are different from each other.

## Patentansprüche

1. Induktionsherd (100), der Folgendes umfasst:
ein Gehäuse (1);
eine Deckplatte (2), auf der ein zu erwärmender Gegenstand angeordnet wird;
mehrere Heizspulen (3), die unter der Deckplatte (2) angeordnet sind und die konfiguriert sind, den zu erwärmenden Gegenstand zu erwärmen;
mehrere Heizbereiche (4a, 4b), die auf der Deckplatte (2) gebildet sind und die konfiguriert sind, eine Position anzugeben, bei der der zu erwärmende Gegenstand angeordnet wird;
einen Last-Detektionsteil (6), der detektiert, dass der zu erwärmende Gegenstand über den mehreren entsprechenden Heizspulen (3) angeordnet ist;
einen Nichtlast-Benachrichtigungsteil (9), der auf der Grundlage eines Detektionsergebnisses des Last-Detektionsteils (6) benachrichtigt, dass der zu erwärmende Gegenstand nicht über mindestens einer der mehreren Heizspulen (3) angeordnet ist;
einen Bedienteil (7), der den zu erwärmenden Heizbereich (4) aus den mehreren Heizbereichen (4a, 4b) wählt;
einen Spulenanzeigeteil (11), der Bedienzustände der mehreren entsprechenden Heizspulen (3) anzeigt; und
einen Steuerteil (8), der den Betrieb des Last-Detektionsteils (6) und des Spulenanzeigeteils (11) steuert;
**dadurch gekennzeichnet, dass**
unter den mehreren Heizspulen (3) zwei oder mehr Heizspulen (3) unter den mehreren entsprechenden Heizbereichen (4a, 4b) angeordnet sind;
der Spulenanzeigeteil (11) Anzeigeteile besitzt, die den mehreren entsprechenden Heizspulen (3) entsprechen;
der Spulenanzeigeteil (11) konfiguriert ist, dann, wenn der zu erwärmende Heizbereich (4) durch den Bedienteil (7) aus den mehreren Heizbereichen (4a, 4b) gewählt ist, durch die Anzeigeteile, die den zwei oder mehr Heizspulen (3), die im gewählten Heizbereich (4) angeordnet sind, anzuzeigen, dass der gewählte Heizbereich (4) als der Heizbereich (4) gewählt ist, der erwärmt werden soll;
der Last-Detektionsteil (6) detektiert, ob der zu erwärmende Gegenstand über den zwei oder mehr entsprechenden Heizspulen (3) im gewählten Heizbereich (4) vorliegt oder nicht;
der Steuerteil (8) derart konfiguriert ist, dass dann, wenn der Last-Detektionsteil (6) detektiert, dass der zu erwärmende Gegenstand über mindestens einer der zwei oder mehr Heizspulen (3) im gewählten Heizbereich (4) vorliegt, der Steuerteil (8) ein Anweisungssignal zum Spulenanzeigeteil (11) ausgibt, das bewirkt, dass der Anzeigeteil, der der Heizspule (3) unter den zwei oder mehr Heizspulen (3) entspricht, über der der zu erwärmende Gegenstand angeordnet ist, die Anzeige fortsetzt, bei der die Heizspule (3), über der der zu erwärmende Gegenstand angeordnet ist, als die zu erwärmende Heizspule (3) gewählt ist; und
der Steuerteil (8) derart konfiguriert ist, dass dann, wenn der Last-Detektionsteil (6) detektiert, dass der zu erwärmende Gegenstand nicht über den zwei oder mehr Heizspulen (3) im gewählten Heizbereich (4) vorliegt, der Steuerteil (8) ein Anweisungssignal zum Spulenanzeigeteil (11) ausgibt, das bewirkt, dass der Anzeigeteil, der der Heizspule (3) entspricht, über der der zu erwärmende Gegenstand nicht vorliegt, eine Anzeige, die anzeigt, dass ein Erwärmen gewählt ist, ändert, bewirkt, dass der Nichtlast-Benachrichtigungsteil (9) über einen Zustand, in dem sich die Heizspule (3) in einem Nicht-Lastzustand befindet, benachrichtigt und bewirkt, dass der Anzeigeteil (11) die Anzeige zu einer Anzeige ändert, die anzeigt, dass die Heizspule (11), über der der zu erwärmende Gegenstand nicht vorliegt, nicht als die zu erwärmende Heizspule (3) gewählt ist.

2. Induktionsherd (100) nach Anspruch 1, wobei
der Steuerteil (8) derart konfiguriert ist, dass dann, wenn der Last-Detektionsteil (6) detektiert, dass der zu erwärmende Gegenstand nicht über mindestens einer der zwei oder mehr entsprechenden Heizspulen (3) im gewählten Heizbereich (4) vorliegt, der Steuerteil (8) ein Anweisungssignal ausgibt, das darüber benachrichtigt, dass die Heizspule (3), über der der zu erwärmende Gegenstand nicht vorliegt, gewählt ist, und der Steuerteil (8) ein Anweisungssignal ausgibt, das bewirkt, dass der Last-Detektionsteil (6) die Anwesenheit oder die Abwesenheit des zu erwärmenden Gegenstands bei der Heizspule (3), die als die Heizspule (3), über der der zu erwärmende Gegenstand nicht vorliegt, detektiert wurde, während eines Zeitraums, in dem über die Auswahl der Heizspule (3), über der der zu erwärmende Gegenstand nicht vorliegt, benachrichtigt wird, kontinuierlich detektiert, und
der Steuerteil (8) derart konfiguriert ist, dass dann, wenn der Last-Detektionsteil (6) während eines Zeitraums, in dem über die Auswahl der Heizspule (3), über der der zu erwärmende Gegenstand nicht vorliegt, benachrichtigt wird, detektiert, dass ein Zustand des zu erwärmenden Gegenstands sich zu einem Zustand ändert, in dem der zu erwärmende Gegenstand über allen der zwei oder mehr Heizspulen (3) im gewählten Heizbereich (4) vorliegt, der Steuerteil (8) ein Anweisungssignal ausgibt, um die Benachrichtigung, dass die Heizspulen (3) sich in einem Nicht-Lastzustand befinden, anzuhalten, und ein Anweisungssignal ausgibt, um ein Erwärmen durch die zwei oder mehr Heizspulen (3) im gewählten Heizbereich (4) durchzuführen und zu bewirken, dass der Spulenanzeigeteil (11) eine Anzeige durchführt, bei der ein Erwärmen in Bezug auf die zwei oder mehr Heizspulen (3) im gewählten Heizbereich (4) gewählt ist.

3. Induktionsherd (100) nach Anspruch 1 oder 2, wobei
eine Benachrichtigungszeit, während der eine Benachrichtigung vorgenommen wird, dass der zu erwärmende Gegenstand über keiner der zwei oder mehr Heizspulen (3) im gewählten Heizbereich (4) vorliegt, länger eingestellt ist, als eine Benachrichtigungszeit, während der eine Benachrichtigung vorgenommen wird, dass der zu erwärmende Gegenstand über keiner der zwei oder mehr Heizspulen (3) im gewählten Heizbereich (4) vorliegt.

4. Induktionsherd (100) nach einem der Ansprüche 1 bis 3, wobei
dann, wenn die Detektion vorgenommen wird, dass der zu erwärmende Gegenstand nicht über mindestens einer der zwei oder mehr Heizspulen (3) im gewählten Heizbereich (4) vorliegt, der Last-Detektionsteil (6) detektiert, ob der zu erwärmende Gegenstand über zwei oder mehr Heizspulen (3), die in dem Heizbereich (4) unter den mehreren Heizbereichen (4a, 4b), der angrenzend an den gewählten Heizbereich (4) angeordnet ist, angeordnet sind, vorliegt oder nicht,
dann, wenn der Last-Detektionsteil (6) detektiert, dass der zu erwärmende Gegenstand über den zwei oder mehr Heizspulen (3), die im Heizbereich (4), der angrenzend an den gewählten Heizbereich (4) angeordnet ist, angeordnet sind, vorliegt oder nicht, der Steuerteil (8) ein Anweisungssignal ausgibt, das durch den Nichtlast-Benachrichtigungsteil (9) benachrichtigt, dass die Heizspule (3), die als die Heizspule (3) detektiert wurde, über der der zu erwärmende Gegenstand nicht vorliegt, im gewählten Heizbereich (4) vorhanden ist,
dann, wenn der Last-Detektionsteil (6) detektiert, dass der zu erwärmende Gegenstand nicht über den zwei oder mehr Heizspulen (3), die in dem Heizbereich (4), der angrenzend an den gewählten Heizbereich (4) angeordnet ist, angeordnet sind, vorliegt, der Steuerteil (8) kein Anweisungssignal ausgibt, das benachrichtigt, dass der gewählte Heizbereich (4) sich in einem Nicht-Lastzustand befindet, und
der Steuerteil (8) konfiguriert ist, zu bewirken, dass der Spulenanzeigeteil (11) einen Anzeigemodus von einer Anzeige eines Zustands, in dem die Heizspule (3) als die zu erwärmende Heizspule (3) gewählt ist, zu einer Anzeige ändert, in der die Heizspule (3), die als die Heizspule (3) detektiert wurde, über der der zu erwärmende Gegenstand vorliegt, die zu erwärmende Heizspule ist.

5. Induktionsherd (100) nach einem der Ansprüche 1 bis 4, der ferner Folgendes umfasst:
ein Temperaturdetektionselement (16), das im gewählten Heizbereich (4) angeordnet ist; und einen Temperaturanpassteil (17), der konfiguriert ist, eine Temperatur des zu erwärmenden Gegenstands, der auf der Deckplatte (2) angeordnet ist, auf der Grundlage von Temperaturinformationen aus dem Temperaturdetektionselement (16) anzupassen, wobei
das Temperaturdetektionselement (16) zwischen den Heizspulen (3), die unter den zwei oder mehr Heizspulen (3) in den gewählten Heizbereichen (4) aneinander angrenzend angeordnet sind, angeordnet ist und der Temperaturanpassteil (17) konfiguriert ist, ein Erwärmen durchzuführen, wenn der Last-Detektionsteil (6) detektiert, dass der zu erwärmende Gegenstand über den entsprechenden Heizspulen (3), die aneinander angrenzend angeordnet sind, vorliegt.

6. Induktionsherd (100) nach einem der Ansprüche 1 bis 5, wobei
der Nichtlast-Benachrichtigungsteil (9) ferner einen Schallerzeugungsteil enthält und
der Schallerzeugungsteil zusätzlich zur Anzeige durch den Spulenanzeigeteil (11) benachrichtigt, dass der zu erwärmende Gegenstand nicht über einer der zwei oder mehr Heizspulen (3), die im gewählten Heizbereich (4) angeordnet sind, angeordnet ist.

7. Induktionsherd (100) nach Anspruch 5 oder 6, wobei
die Anwesenheit oder die Abwesenheit des zu erwärmenden Gegenstands auf der Grundlage von Temperaturinformationen, die durch das Temperaturdetektionselement (16) detektiert wurden, detektiert wird, und
dann, wenn der Last-Detektionsteil (6) detektiert, dass der zu erwärmende Gegenstand über den zwei oder mehr entsprechenden Heizspulen (3) im gewählten Heizbereich (4) vorliegt, ein Erwärmen durch den Temperaturanpassteil (17) durchgeführt wird, wenn eine Temperaturerhöhung einer Temperatur des zu erwärmenden Gegenstands, die durch das Temperaturdetektionselement (16) detektiert wurde, gleich oder größer einem vorgegebenen Wert ist, und die Heizleistung des Erwärmens durch den Temperaturanpassteil (17) verringert wird oder das Erwärmen angehalten wird, wenn die Temperaturerhöhung der Temperatur des zu erwärmenden Gegenstands, die durch das Temperaturdetektionselement (16) detektiert wird, unter dem vorgegebenen Wert liegt.

8. Induktionsherd (100) nach einem der Ansprüche 5 bis 7, wobei
das Temperaturdetektionselement (16) konfiguriert ist, eine Temperatur durch Detektieren einer Menge von Infrarotstrahlen zu detektieren, und
dann, wenn der Last-Detektionsteil (6) detektiert, dass der zu erwärmende Gegenstand über den zwei oder mehr entsprechenden Heizspulen (3) im gewählten Heizbereich (4) vorliegt,
ein Erwärmen durch den Temperaturanpassteil (17) durchgeführt wird, wenn das Temperaturdetektionselement (16) die Menge von Infrarotstrahlen, die gleich oder größer einem vorgegebenen Wert ist, zu einem Zeitpunkt, zu dem ein elektrischer Strom hoher Frequenz den zwei oder mehr Heizspulen (3) zugeführt wird, nicht detektiert oder wenn eine Änderung einer Detektionsmenge von Infrarotstrahlen zwischen bevor und nachdem ein vorgegebener Betrag eines elektrischen Stroms einer hohen Frequenz den zwei oder mehr Heizspulen (3) zugeführt wird, gleich oder größer einem vorgegebenen Wert ist.

9. Induktionsherd (100) nach einem der Ansprüche 5 bis 8, wobei
der Last-Detektionsteil (6) konfiguriert ist, eine Bestimmung von Materialien des zu erwärmenden Gegenstands durchzuführen, und
ein Erwärmen durch den Temperaturanpassteil (17) durchgeführt wird, wenn der Last-Detektionsteil (6) bestimmt, dass die Materialien des zu erwärmenden Gegenstands, der über den zwei oder mehr entsprechenden Heizspulen (3), die im gewählten Heizbereich (4) angeordnet sind, angeordnet ist, einander gleich sind, und das Erwärmen durch den Temperaturanpassteil (17) nicht durchgeführt wird, wenn der Last-Detektionsteil (6) bestimmt, dass die Materialien des zu erwärmenden Gegenstands, der über den zwei oder mehr entsprechenden Heizspulen (3), die im gewählten Heizbereich (4) angeordnet sind, angeordnet ist, voneinander verschieden sind.

## Revendications

1. Appareil de cuisson à chauffage par induction (100) comprenant :
un corps (1) ;
une plaque supérieure (2) sur laquelle un objet à chauffer est placé ;
une pluralité de bobines chauffantes (3) qui sont disposées sous la plaque supérieure (2) et sont conçues pour chauffer l'objet à chauffer ;
une pluralité de zones chauffantes (4a, 4b) qui sont formées sur la plaque supérieure (2) et sont conçues pour indiquer une position où l'objet à chauffer est placé ;
une partie de détection de charge (6) qui détecte que l'objet à chauffer est placé au-dessus de la pluralité de bobines chauffantes respectives (3) ;
une partie de notification de non-charge (9) qui notifie que l'objet à chauffer n'est pas placé au-dessus d'au moins une de la pluralité de bobines chauffantes (3) en fonction d'un résultat de détection de la partie de détection de charge (6) ;
une partie de fonctionnement (7) qui sélectionne la zone chauffante (4) à chauffer parmi la pluralité de zones chauffantes (4a, 4b) ;
une partie d'affichage de bobine (11) qui affiche des états de fonctionnement de la pluralité de bobines chauffantes respectives (3) ; et
une partie de commande (8) qui commande des fonctionnements de la partie de détection de charge (6) et de la partie d'affichage de bobine (11) ;
**caractérisé en ce que**
parmi la pluralité de bobines chauffantes (3), au moins deux bobines chauffantes (3) sont disposées sous la pluralité de zones chauffantes respectives (4a, 4b) ;
la partie d'affichage de bobine (11) comporte des parties d'affichage qui correspondent à la pluralité de bobines chauffantes respectives (3) ;
la partie d'affichage de bobine (11) est conçue pour, lorsque la zone chauffante (4) à chauffer est sélectionnée par la partie de fonctionnement (7) parmi la pluralité de zones chauffantes (4a, 4b), indiquer, par les parties d'affichage qui correspondent aux au moins deux bobines chauffantes (3) disposées dans la zone chauffante sélectionnée (4), que la zone chauffante sélectionnée (4) est sélectionnée en tant que zone chauffante à chauffer (4) ;
la partie de détection de charge (6) détecte si oui ou non l'objet à chauffer existe au-dessus des au moins deux bobines chauffantes respectives (3) dans la zone chauffante sélectionnée (4) ;
la partie de commande (8) est conçue de manière que, lorsque la partie de détection de charge (6) détecte que l'objet à chauffer existe au-dessus d'au moins une des au moins deux bobines chauffantes (3) dans la zone chauffante sélectionnée (4), la partie de commande (8) émet vers la partie d'affichage de bobine (11) un signal d'instruction qui amène la partie d'affichage qui correspond à la bobine chauffante (3) au-dessus de laquelle l'objet à chauffer est placé parmi les au moins deux bobines chauffantes (3) à continuer l'affichage où la bobine chauffante (3) au-dessus de laquelle l'objet à chauffer est placé est sélectionnée en tant que bobine chauffante (3) à chauffer ; et
la partie de commande (8) est conçue de manière que, lorsque la partie de détection de charge (6) détecte que l'objet à chauffer n'existe pas au-dessus des au moins deux bobines chauffantes (3) dans la zone chauffante sélectionnée (4), la partie de commande (8) émet vers la partie d'affichage de bobine (11) un signal d'instruction qui amène la partie d'affichage correspondant à la bobine chauffante (3) au-dessus de laquelle l'objet à chauffer n'existe pas, à changer un affichage indiquant que le chauffage est sélectionné, amène la partie de notification de non-charge (9) à notifier d'un état que la bobine chauffante (3) est dans un état de non-charge, et amène la partie d'affichage (11) à changer l'affichage en affichage indiquant que la bobine chauffante (11) au-dessus de laquelle l'objet à chauffer n'existe pas n'est pas sélectionnée en tant que bobine chauffante (3) à chauffer.

2. Appareil de cuisson à chauffage par induction (100) selon la revendication 1, dans lequel
la partie de commande (8) est conçue de manière que, lorsque la partie de détection de charge (6) détecte que l'objet à chauffer n'existe pas au-dessus d'au moins une des deux bobines chauffantes respectives (3) dans la zone chauffante sélectionnée (4), la partie de commande (8) émet un signal d'instruction qui notifie que la bobine chauffante (3) au-dessus de laquelle l'objet à chauffer n'existe pas est sélectionnée, et la partie de commande (8) émet un signal d'instruction qui amène la partie de détection de charge (6) à détecter en continu la présence ou la non-présence de l'objet à chauffer au niveau de la bobine chauffante (3) qui est détectée en tant que bobine chauffante (3) au-dessus de laquelle l'objet à chauffer n'existe pas pendant une période où la sélection de la bobine chauffante (3) au-dessus de laquelle l'objet à chauffer n'existe pas est notifiée, et
la partie de commande (8) est conçue de manière que, lorsque la partie de détection de charge (6) détecte qu'un état de l'objet à chauffer est changé en un état où l'objet à chauffer existe au-dessus de toutes les au moins deux bobines chauffantes (3) dans la zone chauffante sélectionnée (4) pendant une période où la sélection des bobines chauffantes (3) au-dessus desquelles l'objet à chauffer n'existe pas est notifiée, la partie de commande (8) émet un signal d'instruction de manière à arrêter la notification selon laquelle les bobines chauffantes (3) sont dans un état de non-charge, et émet un signal d'instruction de manière à effectuer le chauffage par les au moins deux bobines chauffantes (3) dans la zone chauffante sélectionnée (4) et à amener la partie d'affichage de bobine (11) à effectuer un affichage où le chauffage est sélectionné par rapport aux au moins deux bobines chauffantes (3) dans la zone chauffante sélectionnée (4).

3. Appareil de cuisson à chauffage par induction (100) selon la revendication 1 ou 2, dans lequel
un temps de notification pendant lequel une notification est effectuée selon laquelle l'objet à chauffer existe au-dessus d'aucune des au moins deux bobines chauffantes (3) dans la zone chauffante sélectionnée (4) est réglé pour être plus long qu'un temps de notification pendant lequel la notification est effectuée selon laquelle l'objet à chauffer n'existe au-dessus d'aucune des au moins deux bobines chauffantes (3) dans la zone chauffante sélectionnée (4).

4. Appareil de cuisson à chauffage par induction (100) selon l'une quelconque des revendications 1 à 3, dans lequel
lorsque la détection est effectuée que l'objet à chauffer n'existe pas au-dessus d'au moins une des au moins deux bobines chauffantes (3) dans la zone chauffante sélectionnée (4), la partie de détection de charge (6) détecte si oui ou non l'objet à chauffer existe au-dessus des au moins deux bobines chauffantes (3) agencées dans la zone chauffante (4) disposée de manière adjacente à la zone chauffante sélectionnée (4) parmi la pluralité de zones chauffantes (4a, 4b),
lorsque la partie de détection de charge (6) détecte que l'objet à chauffer existe au-dessus des au moins deux bobines chauffantes (3) agencées dans la zone chauffante (4) disposée de manière adjacente à la zone chauffante sélectionnée (4), la partie de commande (8) émet un signal d'instruction qui notifie que la bobine chauffante (3) qui est détectée en tant que bobine chauffante (3) au-dessus de laquelle l'objet à chauffer n'existe pas est présente dans la zone chauffante sélectionnée (4) par la partie de notification de non-charge (9),
lorsque la partie de détection de charge (6) détecte que l'objet à chauffer n'existe pas au-dessus des au moins deux bobines chauffantes (3) agencées dans la zone chauffante (4) disposée de manière adjacente à la zone chauffante sélectionnée (4), la partie de commande (8) n'émet pas un signal d'instruction qui notifie que la zone chauffante sélectionnée (4) est dans un état hors charge, et
la partie de commande (8) est conçue pour amener la partie d'affichage de bobine (11) à changer un mode d'affichage d'un affichage d'un état où la bobine chauffante (3) est sélectionnée en tant que bobine chauffante (3) à chauffer en un affichage où la bobine chauffante (3) qui est détectée en tant que bobine chauffante (3) au-dessus de laquelle l'objet à chauffer existe est la bobine chauffante (3) à chauffer.

5. Appareil de cuisson à chauffage par induction (100) selon l'une quelconque des revendications 1 à 4, comprenant en outre :
un élément de détection de température (16) disposé dans la zone chauffante sélectionnée (4) ; et une partie d'ajustement de température (17) qui est conçue pour ajuster une température de l'objet à chauffer placé sur la plaque supérieure (2) en fonction d'informations de température depuis l'élément de détection de température (16),
l'élément de détection de température (16) étant disposé entre les bobines chauffantes (3) disposées de manière adjacente les unes aux autres parmi les au moins deux bobines chauffantes (3) dans les zones chauffantes sélectionnées (4), et la partie d'ajustement de température (17) est conçue pour effectuer le chauffage lorsque la partie de détection de charge (6) détecte que l'objet à chauffer existe au-dessus des bobines chauffantes respectives (3) disposées de manière adjacentes les unes aux autres.

6. Appareil de cuisson à chauffage par induction (100) selon l'une quelconque des revendications 1 à 5, dans lequel
la partie de notification de non-charge (9) comprend en outre une partie de génération sonore, et
en plus de l'affichage par la partie d'affichage de bobine (11), la partie de génération sonore notifie que l'objet à chauffer n'est placé au-dessus d'aucune des au moins deux bobines chauffantes (3) disposées dans la zone chauffante sélectionnée (4).

7. Appareil de cuisson à chauffage par induction (100) selon la revendication 5 ou 6, dans lequel
la présence ou la non-présence de l'objet à chauffer est détectée en fonction d'informations de température détectées par l'élément de détection de température (16), et
au cas où la partie de détection de charge (6) détecte que l'objet à chauffer existe au-dessus des au moins deux bobines chauffantes respectives (3) dans la zone chauffante sélectionnée (4), le chauffage par la partie d'ajustement de température (17) est effectué lorsqu'une élévation de température d'une température de l'objet à chauffer détectée par l'élément de détection de température (16) est égale ou supérieure à une valeur prédéterminée, et une puissance de chauffage du chauffage par la partie d'ajustement de température (17) est abaissée ou le chauffage est arrêté lorsque l'élévation de température de la température de l'objet à chauffer détectée par l'élément de détection de température (16) est au-dessous de la valeur prédéterminée.

8. Appareil de cuisson à chauffage par induction (100) selon l'une quelconque des revendications 5 à 7, dans lequel
l'élément de détection de température (16) est conçu pour détecter une température par la détection d'une quantité de rayons infrarouges, et
au cas où la partie de détection de charge (6) détecte que l'objet à chauffer existe au-dessus des au moins deux bobines chauffantes respectives (3) dans la zone chauffante sélectionnée (4),
le chauffage par la partie d'ajustement de température (17) est effectué lorsque l'élément de détection de température (16) ne détecte pas la quantité de rayons infrarouges qui est égale ou supérieure à une valeur prédéterminée à un moment où un courant électrique de haute fréquence est fourni aux au moins deux bobines chauffantes (3) ou où un changement de quantité de détection de rayons infrarouges entre avant et après qu'une quantité prédéterminée de courant électrique de haute fréquence est fournie aux au moins deux bobines chauffantes (3) est égal ou supérieur à une valeur prédéterminée.

9. Appareil de cuisson à chauffage par induction (100) selon l'une quelconque des revendications 5 à 8, dans lequel
la partie de détection de charge (6) est conçue pour effectuer une détermination de matériaux des objets à chauffer, et
le chauffage par la partie d'ajustement de température (17) est effectué lorsque la partie de détection de charge (6) détermine que les matériaux des objets à chauffer placés au-dessus des au moins deux bobines chauffantes respectives (3) disposées dans la zone chauffante sélectionnée (4) sont égaux les uns aux autres, et le chauffage par la partie d'ajustement de température (17) n'est pas effectué lorsque la partie de détection de charge (6) détermine que les matériaux des objets à chauffer placés au-dessus des au moins deux bobines chauffantes respectives (3) disposées dans la zone chauffante sélectionnée (4) sont différents les uns des autres.
